(19) Europäisches Patentamt
European Patent Office
Office européen des brevets

(11) **EP 3 583 493 B1**

(12) **EUROPÄISCHE PATENTSCHRIFT**

(45) Veröffentlichungstag und Bekanntmachung des Hinweises auf die Patenterteilung:
**19.04.2023 Patentblatt 2023/16**

(21) Anmeldenummer: **18704535.6**

(22) Anmeldetag: **09.02.2018**

(51) Internationale Patentklassifikation (IPC):
*G06F 3/041* (2006.01)    *G06F 3/0354* (2013.01)
*G06F 3/0338* (2013.01)    *G06F 3/01* (2006.01)

(52) Gemeinsame Patentklassifikation (CPC):
**G06F 3/0338; G06F 3/016; G06F 3/03547;
G06F 3/0414;** G06F 2203/04105

(86) Internationale Anmeldenummer:
**PCT/EP2018/053259**

(87) Internationale Veröffentlichungsnummer:
**WO 2018/149743 (23.08.2018 Gazette 2018/34)**

(54) **EINGABEVORRICHTUNG**

INPUT APPARATUS

DISPOSITIF D'ENTRÉE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **15.02.2017   DE 102017202408**

(43) Veröffentlichungstag der Anmeldung:
**25.12.2019   Patentblatt 2019/52**

(73) Patentinhaber: **Robert Bosch GmbH
70442 Stuttgart (DE)**

(72) Erfinder:
• **HERMANNS, Ingo
31134 Hildesheim (DE)**
• **BUENGER, Christoph
30451 Hannover (DE)**

(56) Entgegenhaltungen:
DE-A1-102010 010 574    US-A1- 2010 045 624
US-A1- 2012 326 981    US-A1- 2013 249 808
US-A1- 2016 004 355

## Beschreibung

### Stand der Technik

Die Erfindung betrifft eine Eingabevorrichtung.

Aus der US 2013/0002571 A1 ist ein Gerät zur Eingabe von Daten in eine berührungsempfindliche Benutzeroberfläche bekannt, wobei das Gerät eine Basis aufweist, die das Geräte an der Benutzeroberfläche fixiert. Das Gerät weist weiterhin auf eine Taste mit einer äußeren Touch-Oberfläche und einer inneren Oberfläche, die entsprechend einer Anwesenheit eines Fingers eines Benutzers an der äußeren Touch-Oberfläche ein Dateninputsignal überträgt sowie einen Arm, der die Taste mit der Basis verbindet.

Aus der US 2010/0045624 A1 ist ein Eingabegerät bekannt.

Aus der US 2016/0004355 A1 ist ein User Interface für einen Mediaplayer oder ein elektronisches Gerät bekannt,

Aus der US 2012/0326981 A1 ist ein in X-Y-Richtung verschiebbarer Bildschirm eines mobilen Telefons bekannt, wobei ein Benutzer durch Verschiebung des Bildschirms in X-Y-Richtung eine Eingabe tätigt.

### Offenbarung der Erfindung

Die Erfindung betrifft eine Eingabevorrichtung, umfassend ein Scheibe und eine Halterung, wobei auf der Scheibe ein Bedienelement derart angeordnet ist, dass das Bedienelement kraftschlüssig mit der Scheibe verbunden ist und wobei die Scheibe derart an der Halterung angeordnet ist, dass die Scheibe in der Halterung gelagert ist. Eine Krafteinwirkung auf das Bedienelement bewirkt eine Krafteinwirkung auf die Scheibe und/oder zugleich auf die Scheibe und die Halterung. An der Scheibe und/oder an der Halterung sind ein oder mehrere Sensoren so angeordnet, dass eine Krafteinwirkung auf die Scheibe und/oder eine Verschiebung der Scheibe in wenigstens eine vorgegebene Richtung messbar sind und/oder dass eine Krafteinwirkung zugleich auf die Scheibe und auf die Halterung und/oder eine Verschiebung zugleich der Scheibe und der Halterung in wenigstens eine vorgegebene Richtung messbar sind. Vorteilhafterweise kann beispielsweise ein Nutzer das Bedienelement auf der Scheibe verwenden, um eine gewünschte Eingabe zu tätigen. Zur Detektion der gewünschten Eingabe des Nutzers werden vorteilhafterweise Sensoren an der Scheibe und/oder an der Halterung angebracht, um die vom Nutzer aufgebrachte Kraft auf das Bedienelement, welches sich auf die Scheibe und/oder zugleich auf die Scheibe und die Halterung überträgt, zu messen. Mittels dieser Vorrichtung kann insbesondere Platz sowie Kosten eingespart werden.

In einer vorteilhaften Ausgestaltung sind an der Scheibe und/oder an der Halterung der eine oder die mehreren Sensoren so angeordnet, dass die Krafteinwirkung zugleich auf die Scheibe und auf die Halterung und/oder die Verschiebung zugleich der Scheibe und der Halterung in wenigstens drei vorgegebene Richtungen messbar sind. Hierdurch kann sichergestellt werden, dass ein Nutzer Eingaben in wenigstens drei vorgegebene Richtungen eingeben kann, wobei folglich eine Krafteinwirkung und/oder eine Verschiebung beispielsweise sowohl in X-Richtung, in Y-Richtung sowie in Z-Richtung messbar sind.

Weiterhin ist die Scheibe vorzugsweise in der Halterung der Eingabevorrichtung in wenigstens eine Richtung verschiebbar gelagert. Hierdurch kann gewährleistet werden, dass eine Krafteinwirkung auf die Scheibe und/oder eine Verschiebung der Scheibe möglich ist, wobei auf die Scheibe mittels einer Betätigung bzw. einer Bedienung des Bedienelements eingewirkt werden kann. Hierdurch kann sichergestellt werden, dass eine Krafteinwirkung auf die Scheibe und/oder eine Verschiebung der Scheibe mittels der an der Scheibe angebrachten Sensoren messbar ist.

In einer Ausgestaltungsform ist die Halterung der Eingabevorrichtung in wenigstens eine Richtung verschiebbar gelagert. Hierdurch kann gewährleistet werden, dass eine Krafteinwirkung zugleich auf die Scheibe und auf die Halterung und/oder eine Verschiebung zugleich der Scheibe und der Halterung möglich ist, wobei zugleich auf die Scheibe und auf die Halterung mittels einer Betätigung bzw. einer Bedienung des Bedienelements eingewirkt werden kann. Hierdurch kann sichergestellt werden, dass eine Krafteinwirkung zugleich auf die Scheibe und auf die Halterung und/oder eine Verschiebung zugleich der Scheibe und der Halterung mittels der an der Halterung angebrachten Sensoren messbar ist.

In einer Weiterentwicklung sind die Scheibe und/oder das Bedienelement transparent. Hierdurch kann beispielsweise ein Nutzer der Eingabeeinheit durch die Scheibe und/oder durch das Bedienelement hindurch sehen. Vorteilhafterweise kann ein Bild und/oder eine Anzeigeeinheit unter der Scheibe angebracht werden, wobei der Nutzer das Bild und/oder die Anzeigeeinheit durch eine vorzugsweise transparente Scheibe und/oder durch ein transparentes Bedienelement wahrnehmen kann.

Ferner ist in der Eingabevorrichtung vorteilhafterweise eine Anzeigeeinheit angeordnet. Hierdurch kann eine Bedienung des Elements und somit eine Eingabe durch einen Benutzer eine Aktion auf der Anzeigeeinheit auslösen, wobei der Nutzer seine Eingabe direkt an der Anzeigeeinheit verfolgen kann. Durch die Anordnung der Anzeigeeinheit in der Eingabevorrichtung kann vorzugsweise Platz eingespart werden, welcher zur Koppelung, beispielsweise durch Verkabelung oder elektrische Verbindungen, der Anzeigeeinheit mit der Eingabevorrichtung benötigt werden würde.

In einer vorteilhaften Ausgestaltung ist die Anzeigeeinheit an der Scheibe auf einer, dem Bedienelement abgewandten Seite der Scheibe und/oder an der Halterung angeordnet. Hierdurch kann eine Bedienung des Elements und somit eine Eingabe durch einen Benutzer eine Aktion auf der Anzeigeeinheit auslösen, wobei der Nutzer seine Eingabe direkt an der Anzeigeeinheit verfolgen kann. Ist die Anzeigeeinheit an der Scheibe auf der, dem Bedienelement abgewandten Seite der Scheibe angeordnet, so kann ein Nutzer, insbesondere durch eine transparente Scheibe, auf die Anzeigeeinheit blicken. Eine Eingabe des Nutzers und somit ein Durchführen einer Aktion kann somit insbesondere auf der Anzeigeeinheit dargestellt werden. Ist vorteilhafterweise das Bedienelement transparent so kann der Nutzer ebenfalls durch das Bedienelement auf die Anzeigeeinheit blicken.

In einer Ausführungsform ist an der Scheibe ein Touchpad angeordnet und/oder die Scheibe ist als ein Touchpad ausgebildet. Hierdurch können beispielsweise durch einen Nutzer auch Eingaben auf dem Touchpad gemacht werden. Das auf der Scheibe angeordnete Bedienelement kann beispielsweise als Referenz für die Bedienung des Touchpads verwendet werden. Hierdurch kann beispielsweise der Nutzer mittels des Bedienelements erfühlen, wo sich seine Finger auf dem Touchpad befinden.

Die kraftschlüssige Verbindung des Bedienelements mit der Scheibe ist in einer vorteilhaften Ausführung eine Klebeverbindung. Hierdurch kann sichergestellt werden, dass das Bedienelement kraftschlüssig mit der Scheibe verbunden ist. Die Klebeverbindung ist eine kostengünstige Form der Anordnung des Bedienelements auf der Scheibe, wobei ebenfalls eine schnelle Montage gewährleistet werden kann. Ebenfalls kann eine Klebeverbindung vorteilhafterweise transparent ausgestaltet werden, wodurch ein Nutzer durch das Bedienelement und die Scheibe blicken kann.

In einer Weiterentwicklung umfasst die Eingabevorrichtung einen Aktuator für eine haptische Rückmeldung. Die Eingabevorrichtung umfasst einen Aktuator für eine haptische Rückmeldung, insbesondere bei einer Krafteinwirkung auf das Bedienelement und/oder bei einem Verschieben des Bedienelements. Der Vorteil liegt darin, dass dem Nutzer der Eingabevorrichtung vorteilhafterweise eine Rückmeldung bezüglich seiner Eingabe gegeben werden kann. Hierdurch kann der Nutzer beispielsweise die Eingabevorrichtung benutzen, ohne auf diese zu blicken. Die haptische Rückmeldung kann dem Nutzer ferner eine Rückmeldung geben, wo sich die Finger des Nutzers auf der Scheibe befinden. Folglich wird einem Nutzer der Eingabevorrichtung eine haptische Rückmeldung gegeben, wenn dieser Kraft auf das Bedienelement aufbringt und/oder das Bedienelement verschiebt. Ist die Scheibe vorteilhafterweise als ein Touchpad ausgebildet, so kann einem Nutzer ebenfalls eine haptische Rückmeldung gegeben werden, wenn der Nutzer das Touchpad in einer vorgegebener Weise kontaktiert. In einer Ausgestaltungsform kann bei Verwendung eines haptischen Displays der integrierte Kraftsensor in Z-Richtung verwendet werden, um eine Eingabe des Nutzers mittels des Bedienelements in Z-Richtung zu messen. Hierdurch können Bauraum und Kosten eingespart werden.

Vorteilhafterweise sind der eine oder die mehreren Sensoren an der Scheibe und/oder an der Halterung Kraftsensoren und/oder Wegsensoren. Hierdurch sind eine Krafteinwirkung auf die Scheibe und/oder zugleich auf die Scheibe und auf die Halterung mittels des einen oder der mehreren Kraftsensoren und/oder eine Verschiebung der Scheibe und/oder zugleich der Scheibe und der Halterung mittels des einen oder der mehreren Wegsensoren messbar.

Ferner wird ein Verfahren zum Betreiben einer Eingabevorrichtung vorgeschlagen, wobei die Eingabevorrichtung eine Scheibe und eine Halterung umfasst. Auf der Scheibe der Eingabevorrichtung ist ein Bedienelement derart angeordnet, dass das Bedienelement kraftschlüssig mit der Scheibe verbunden ist. Die Scheibe ist ferner derart an der Halterung angeordnet, dass die Scheibe in der Halterung gelagert ist. Eine Krafteinwirkung auf das Bedienelement bewirkt eine Krafteinwirkung auf die Scheibe und/oder zugleich auf die Scheibe und die Halterung. An der Scheibe und/oder an der Halterung sind ein oder mehrere Sensoren so angeordnet, dass eine Krafteinwirkung auf die Scheibe und/oder eine Verschiebung der Scheibe in wenigstens eine vorgegebene Richtung messbar sind und/oder dass eine Krafteinwirkung zugleich auf die Scheibe und auf die Halterung und/oder eine Verschiebung zugleich der Scheibe und der Halterung in wenigstens eine vorgegebene Richtung messbar sind.

Das vorgeschlagene Verfahren umfasst die folgenden Schritte:
Ermitteln einer Krafteinwirkung auf die Scheibe und/oder einer Verschiebung der Scheibe in wenigstens eine vorgegebene Richtung mittels des einen oder der mehreren Sensoren an der Scheibe, wobei die Krafteinwirkung auf die Scheibe und/oder die Richtung der Verschiebung der Scheibe und/oder der zurückgelegte Weg bei einer Verschiebung der Scheibe mittels des einen oder der mehreren Sensoren an der Scheibe gemessen wird und/oder Ermitteln einer Krafteinwirkung zugleich auf die Scheibe und auf die Halterung und/oder einer Verschiebung zugleich der Scheibe und der Halterung in wenigstens eine vorgegebene Richtung mittels des einen oder der mehreren Sensoren an der Scheibe und/oder an der Halterung, wobei die Krafteinwirkung zugleich auf die Scheibe und auf die Halterung und/oder die Richtung der Verschiebung zugleich der Scheibe und der Halterung und/oder der zurückgelegte Weg bei einer Verschiebung zugleich der Scheibe und der Halterung mittels des einen oder der mehreren Sensoren an der Scheibe und/oder an der Halterung gemessen wird;

Ausführen einer Aktion entsprechend der ermittelten Krafteinwirkung auf die Scheibe und/oder der ermittelten Verschiebung der Scheibe in wenigstens eine vorgegebene Richtung und/oder der ermittelten Krafteinwirkung zugleich auf die Scheibe und auf die Halterung und/oder der ermittelten Verschiebung zugleich der Scheibe und der Halterung in wenigstens eine vorgegebene Richtung.

Hierdurch kann sichergestellt werden, dass eine Eingabe beispielsweise eines Nutzers, wobei der Benutzer insbesondere das Bedienelement bedient, detektiert werden kann, indem eine Krafteinwirkung und/oder eine Verschiebung der entsprechenden Elemente ermittelt bzw. gemessen werden kann. Mittels der Eingabe kann vorzugsweise eine entsprechende Aktion, beispielsweise auf einem Display, ausgeführt werden.

In einer vorteilhaften Ausgestaltung wird bei einer Verschiebung des Bedienelements in wenigstens eine vorgegebene Richtung die Scheibe in derselbe Richtung wie das Bedienelement verschoben und/oder bei einer Verschiebung des Bedienelements in wenigstens eine vorgegebene Richtung zugleich die Scheibe und die Halterung in derselbe Richtung wie das Bedienelement verschoben. Hierdurch wird sichergestellt, dass eine Bedienung des Bedienelements sicher gemessen werden kann.

In einer Ausgestaltungsform sind eine Krafteinwirkung auf die Scheibe und/oder zugleich auf die Scheibe und auf die Halterung und/oder eine Verschiebung der Scheibe und/oder zugleich der Scheibe und der Halterung in wenigstens drei Richtungen linear messbar, wobei die Richtung der Verschiebung der Scheibe und/oder zugleich der Scheibe und der Halterung und/oder die Krafteinwirkung auf die Scheibe und/oder zugleich auf die Scheibe und auf die Halterung und/oder der zurückgelegte Weg bei einer Verschiebung der Scheibe und/oder zugleich der Scheibe und der Halterung mittels des einen oder der mehreren Sensoren an der Scheibe und/oder an der Halterung in wenigstens drei Richtungen linear messbar sind. Hierdurch kann gewährleistet werden, dass ein Nutzer mittels des Bedienelements Eingaben in wenigstens drei vorgegebene Richtungen eingeben kann, wobei folglich eine lineare Krafteinwirkung und/oder eine lineare Verschiebung beispielsweise sowohl in X-Richtung, in Y-Richtung sowie in Z-Richtung linear messbar sind.

In einer Weiterentwicklung sind eine Krafteinwirkung auf die Scheibe und/oder zugleich auf die Scheibe und auf die Halterung und/oder eine Verschiebung der Scheibe und/oder zugleich der Scheibe und der Halterung in wenigstens eine Richtung rotatorisch messbar, wobei die Richtung der Verschiebung der Scheibe und/oder zugleich der Scheibe und der Halterung und/oder die Krafteinwirkung auf die Scheibe und/oder zugleich auf die Scheibe und auf die Halterung und/oder der zurückgelegte Weg bei einer Verschiebung der Scheibe und/oder zugleich der Scheibe und der Halterung mittels des einen oder der mehreren Sensoren an der Scheibe und/oder an der Halterung in wenigstens eine Richtung rotatorisch messbar sind. Vorteilhafterweise ist hierdurch eine durch den Nutzer vorgenommene Eingabe mittels des Bedienelements in wenigstens eine vorgegebene Richtung rotatorisch messbar. Folglich sind eine rotatorische Krafteinwirkung und/oder eine rotatorische Verschiebung beispielsweise um eine definierte Achse, beispielsweise die X-Achse, die Y-Achse und/oder die Z-Achse messbar.

## Kurze Beschreibung der Zeichnungen

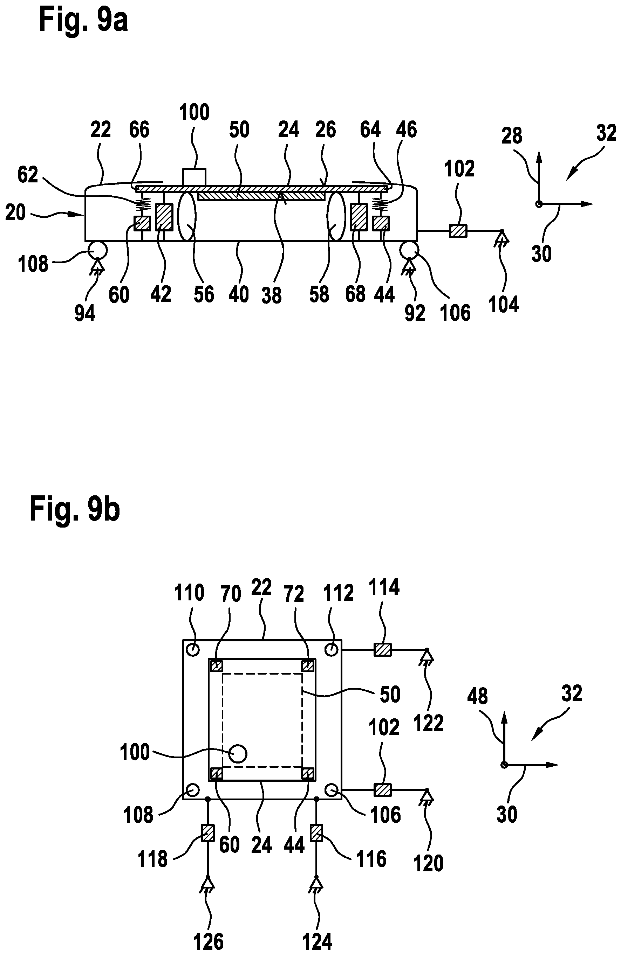

Ausführungsbeispiele der Erfindung sind in den Zeichnungen Fig. 9a und 9b dargestellt und in den nachfolgenden Beschreibungen näher erläutert. Die übrigen Ausführungsbeispiele dienen der Erläuterung der Erfindung. Für die in den verschiedenen Figuren dargestellten und ähnlich wirkenden Elemente werden gleiche Bezugszeichen verwendet, wobei auf eine wiederholte Beschreibung der Elemente verzichtet wird. Es zeigen:

Fig. 1 bis Fig. 8 beziehen sich auf eine Darstellung einer unbeanspruchten Eingabevorrichtung;
Fig. 9 eine schematische Darstellung einer Eingabevorrichtung mit einem Bedienelement gemäß eines Ausführungsbeispiels der vorliegenden Erfindung;
Fig. 11 eine schematische Darstellung einer Eingabevorrichtung mit einem Bedienelement gemäß eines Ausführungsbeispiels ;
Fig. 12 eine schematische Darstellung einer Eingabevorrichtung mit einem Bedienelement gemäß eines Ausführungsbeispiels ;
Fig. 13 eine schematische Darstellung einer Scheibe mit einem Bedienelement gemäß eines Ausführungsbeispiels der vorliegenden Erfindung;
Fig. 14 eine schematische Darstellung eines Bedienelements gemäß eines Ausführungsbeispiels der vorliegenden Erfindung;
Fig. 15 eine schematische Darstellung eines Bedienelements gemäß eines Ausführungsbeispiels der vorliegenden Erfindung;
Fig. 16 eine schematische Darstellung eines Bedienelements gemäß eines Ausführungsbeispiels der vorliegenden Erfindung;
Fig. 17 eine schematische Darstellung einer Scheibe mit einem Bedienelement gemäß eines Ausführungsbeispiels der vorliegenden Erfindung;
Fig. 18 eine schematische Darstellung einer Scheibe mit einem Bedienelement gemäß eines Ausführungsbeispiels der vorliegenden Erfindung;
Fig. 19 eine schematische Darstellung einer Scheibe mit einem Bedienelement gemäß eines Ausführungsbeispiels der vorliegenden Erfindung;
Fig. 20 eine schematische Darstellung eines Fahrzeugs mit einer Eingabevorrichtung gemäß eines Ausführungsbeispiels der vorliegenden Erfindung;

Fig. 21 eine Verfahren zum Betreiben einer Eingabevorrichtung gemäß eines Ausführungsbeispiels der vorliegenden Erfindung.

**Ausführungsformen:**

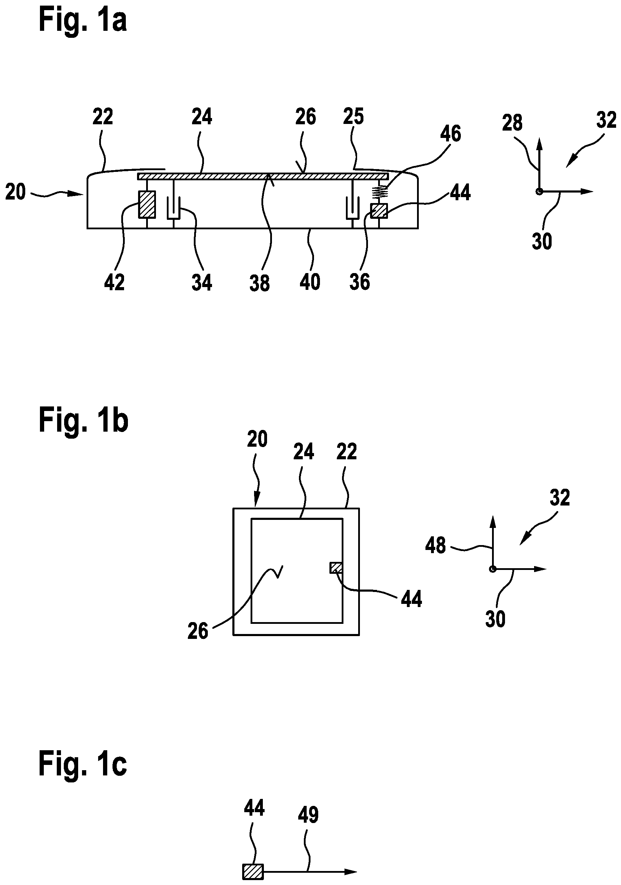

Fig. 1 zeigt eine schematische Darstellung einer Eingabevorrichtung 20. Die Eingabevorrichtung 20 umfasst eine Halterung 22 sowie eine Scheibe 24. Die Scheibe 24 ist derart in der Halterung 22 der Eingabevorrichtung 20 angeordnet, dass die Scheibe 24 in der Halterung 22 gelagert ist. In der beanspruchten Ausführungsform weist die Halterung 22 an einer ersten Seite 25 eine Öffnung auf, wobei an der ersten Seite 25 mit der Öffnung die Scheibe 24 so angeordnet ist, dass eine erste Oberfläche 26 der Scheibe 24 von der Halterung 22 weg zeigt und/oder von einem auf die Eingabevorrichtung 20 blickenden Nutzer bzw. Betrachter, betrachtet werden kann. Alle anderen Seiten der Halterung 22 sind zumindest teilweise geschlossen, sodass die Scheibe 24 von einem Nutzer lediglich durch die Öffnung in der ersten Seite 25 der Halterung 22 sichtbar ist. Die Scheibe weist eine erste Oberfläche 26 sowie eine zweite Oberfläche 38 auf. Die zweite Oberfläche 38 der Scheibe 24 ist in Richtung der Halterung 22 gerichtet, die erste Oberfläche 26 der Scheibe 24 ist gegenüber der zweiten Oberfläche 38 der Scheibe 24 angeordnet und ist in Richtung eines Nutzers bzw. eines Betrachters gerichtet und zeigt folglich vorzugsweise weg von der Halterung 22.

In Fig. 1a wird eine schematische Schnittdarstellung einer Eingabevorrichtung 20 von einer Seite dargestellt. Ein Betrachter der Eingabevorrichtung 20 der Fig. 1a würde von oben auf eine erste Oberfläche 26 der Scheibe 24 blicken. In einem Koordinatensystem 32 zeigt die Z-Achse 28 senkrecht nach oben, mit anderen Worten steht die Z-Achse 28 senkrecht zu der ersten Oberfläche 26 der Scheibe 24. Die X-Achse 30 des Koordinatensystems 32 zeigt entsprechend entlang der ersten Oberfläche 26 der Scheibe 24 und/oder verläuft parallel zu der ersten Oberfläche 26 der Scheibe 24.

Die Scheibe 24 in Fig. 1a wird mittels mindestens einem linearen Lager 34 bzw. einem Führungselement 34 in der Halterung 22 angeordnet. In dieser Ausführungsform wird die Scheibe 24 mittels eines ersten Führungselements 34 sowie mittels eines zweiten Führungselements 36 in der Halterung 22 angeordnet bzw. gelagert. Die Führungselemente 34, 36 sind zum einen an einer zweiten, der ersten Oberfläche 26 der Scheibe 24 gegenüberliegenden Oberfläche 38 der Scheibe 24 angeordnet bzw. befestigt und zum anderen an einer der ersten Seite 25 der Halterung 22, aufweisend die Öffnung, gegenüberliegenden, zweiten Seite 40 der Halterung 22 angeordnet bzw. befestigt. Die Führungselement 34, 36 können sich insbesondere in Z-Richtung 28 bewegen bzw. weisen in Z-Richtung 28 ein Spiel auf, können sich jedoch in die anderen Richtungen, beispielsweise in eine X-Richtung 30 und/oder in eine Y-Richtung, nicht bewegen. Das erste Führungselement 34 sowie das zweite Führungselement 36 sind in dieser Ausführungsform zueinander beabstandet angeordnet, sodass die Scheibe 24 sicher in der Halterung 22 angeordnet ist. In einer Weiterentwicklung werden vier Führungselemente an der Scheibe 24 und an der Halterung 22 angeordnet. Vorzugsweise werden die vier Führungselemente jeweils an unterschiedlichen Ecken der rechteckig ausgeführten Scheibe 24 angeordnet, damit eine sichere Anordnung der Scheibe 24 an der Halterung 22 gewährleistet werden kann.

Weiterhin ist in der Eingabevorrichtung 20 ein erster Kraftsensor 44 angeordnet. Der erste Kraftsensor 44 wird vorzugsweise zwischen der Scheibe 24 und der Halterung 22 angeordnet. Der erste Kraftsensor 44 ist insbesondere zum einen an einer zweiten, der ersten Oberfläche 26 gegenüberliegenden Oberfläche 38 der Scheibe 24 angeordnet bzw. befestigt und zum anderen an einer der ersten Seite 25 der Halterung 22, aufweisend die Öffnung, gegenüberliegenden, zweiten Seite 40 der Halterung 22 angeordnet bzw. befestigt. Der erste Kraftsensor 44 ist in Richtung der Z-Achse angeordnet und ermöglicht folglich eine Messung einer Krafteinwirkung auf die Scheibe 24 in Richtung der Z-Achse. Drückt ein Nutzer bzw. ein Benutzer auf die Scheibe 24 und/oder betätigt ein Nutzer bzw. ein Benutzer die Scheibe 24, um beispielsweise eine Aktion auszuführen, wird diese Krafteinwirkung des Benutzers mittels des ersten Kraftsensors 44 gemessen. Ferner wird eine Feder bzw. eine Rückstellfeder 46 in Reihe zu dem ersten Kraftsensor 44 angeordnet, damit beispielsweise die Scheibe 24 nach einer Betätigung wieder in die Ausgangslage zurückgebracht werden kann. Das Spiel der beiden Führungselemente 34, 36 stellt insbesondere sicher, dass die Krafteinwirkung mittels des ersten Kraftsensors 44 messbar ist.

Ferner ist in der Eingabevorrichtung 20 einen Aktuator 42 angeordnet. Der Aktuator 42 ist vorzugsweise zwischen der Scheibe 24 und der Halterung 22 angeordnet. Der Aktuator 42 ist insbesondere zum einen an einer zweiten, der ersten Oberfläche 26 der Scheibe 24 gegenüberliegenden Oberfläche 38 der Scheibe 24 angeordnet bzw. befestigt und zum anderen an einer der ersten Seite 25 der Halterung 22, aufweisend die Öffnung, gegenüberliegenden, zweiten Seite 40 der Halterung 22 angeordnet bzw. befestigt. Der Aktuator 42 ermöglicht ein haptisches Feedback für einen Benutzer der Eingabevorrichtung 20. Hierfür bringt der Aktuator 42 vorzugsweise die Scheibe 24 zum Schwingen, wenn der Benutzer bzw. der Nutzer die erste Oberfläche 26 der Scheibe 24 in definierter Weise berührt bzw. an einer bestimmten Position kontaktiert und/oder wenn durch den Nutzer eine Kraft auf die Scheibe und folglich auf den ersten Kraftsensor 44 wirkt. In dieser vorteilhaften Ausführungsform sind der Aktuator 42 sowie der erste Kraftsensor 44 zueinander beabstandet angeordnet.

Das Spiel der beiden Führungselemente 34, 36 stellt vorteilhafterweise sicher, dass der Aktuator 42 eine haptische Rückmeldung erzeugen kann, indem der Aktuator 42 die Scheibe 24 zum Schwingen bringt. Für diese Schwingungen der Scheibe 24 ist es vorteilhaft, dass die Scheibe 24 mittels des einen oder der mehreren Führungselemente 34, 36 in der Halterung 22 so angeordnet ist, dass die Scheibe 24 in die mindestens eine Richtung, in welche die Schwingungen von dem Aktuator 42 angeregt werden, bewegbar ist. In dieser Ausführungsform ist der Aktuator 42 in Z-Richtung 28 angeordnet, mit anderen Worten ist der Aktuator 42 so angeordnet, dass die Scheibe 24 mit Schwingungen in Z-Richtung 28 angeregt werden kann. In dieser beispielhaften Ausführungsform wird die erste Rückstellfeder 46 ebenfalls in Richtung der Z-Achse 28 angeordnet, dass die Scheibe 24 bei einer Anregung durch den Aktuator 42, insbesondere mittels Schwingungen, wieder in die Ausgangslage zurückgebracht werden kann.

In einer vorteilhaften Ausführungsform ist die Scheibe 24 als ein Touchpad ausgebildet. Hierdurch kann ein Benutzer Eingaben auf dem Touchpad machen bzw. das Touchpad betätigen, beispielsweise durch ein Drücken und/oder Kontaktieren der Scheibe 24 und/oder durch ein Wischen auf der Scheibe 24, zum Beispiel mittels eines oder mehrerer Finger. Dieses Drücken der Scheibe 24 ist mittels des ersten Kraftsensors 44 messbar.

In einer Weiterentwicklung kann auf der Scheibe 24 ein Bedienelement so angeordnet werden, dass das Bedienelement kraftschlüssig mit der Scheibe 24 verbunden ist.

In Fig. 1b wird eine schematische Schnittdarstellung einer Eingabevorrichtung 20 von oben dargestellt. Ein Betrachter der Eingabevorrichtung 20 in der Fig. 1b würde von vorne auf die erste Oberfläche 26 der Scheibe 24 blicken. In einem Koordinatensystem 32 zeigt die Y-Achse 48 senkrecht nach oben. Die X-Achse 30 des Koordinatensystems 32 zeigt gemäß Fig. 1a nach rechts, in Bezug auf die Blickrichtung eines Nutzers in Fig. 1b. Die Scheibe 24 in Fig. 1b wird, gemäß Fig. 1a, in der Halterung 22 angeordnet bzw. gelagert.

In Fig. 1b ist der erste Kraftsensor 44 sichtbar, welcher unterhalb der Scheibe 24 in der Eingabevorrichtung 20 angeordnet ist. Der erste Kraftsensor 44 ist für einen Betrachter, welcher auf die Eingabevorrichtung 20 blickt, im fertig montierten Zustand nicht sichtbar. In dieser Ausführungsform ist der erste Kraftsensor 44 lediglich zur besseren Darstellung eingezeichnet. Mittels des ersten Kraftsensors 44 kann eine Krafteinwirkung auf die Scheibe 24 in Richtung der Z-Achse 28 gemessen werden.

Fig. 1c gibt einen Überblick welche Kräfte mittels der, in der Eingabevorrichtung 20 angeordneten Sensoren, in dieser Ausführungsform mittels des ersten Kraftsensors 44, gemessen werden können. Vorzugsweise ist mittels des ersten Kraftsensors 44 in Fig. 1c eine erste Druckkraft 49 in Z-Richtung 28 bzw. in Richtung der Z-Achse 28 messbar. Die erste Druckkraft 49 wird mittels des ersten Pfeils 49 dargestellt.

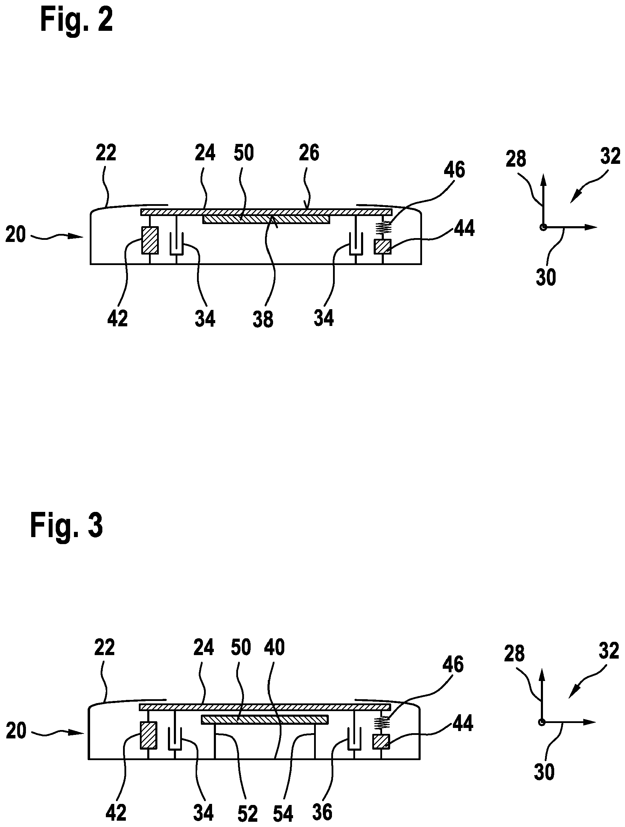

Fig. 2 zeigt eine schematische Darstellung einer Eingabevorrichtung 20. Die Eingabevorrichtung 20 umfasst eine Halterung 22 sowie eine Scheibe 24 und ist gemäß der Fig. 1a ausgestaltet. Der Unterschied der Fig. 2 zu der Fig. 1a besteht darin, dass die Scheibe 24 als eine transparente Scheibe 24 ausgeführt ist. Ferner ist eine Anzeigeeinheit 50 auf der zweiten Oberfläche 38 der Scheibe 24 angeordnet. Vorzugsweise ist die Anzeigeeinheit 50 auf der, einem Betrachter abgewandten Oberfläche der Scheibe 24 angeordnet. Die Anzeigeeinheit 50 ist durch die transparente Scheibe 24 für einen Betrachter sichtbar. In einer vorteilhaften Ausführungsform kann die Scheibe 24 als ein Touchpad gemäß Fig. 1 ausgebildet sein.

In einer Weiterentwicklung kann auf der Scheibe 24 ein Bedienelement so angeordnet werden, dass das Bedienelement kraftschlüssig mit der Scheibe 24 verbunden ist.

Auf der Anzeigeeinheit 50 können Informationen für einen Benutzer bzw. einen Nutzer dargestellt werden. Beispielsweise können Auswahlmenüs, Informationen über eine Navigation eines Fahrzeugs, Informationen über einen Fahrzeugzustand und/oder Informationen über ein Infotainmentsystem dargestellt werden.

Der Blick von oben auf die Eingabevorrichtung 20 gemäß Fig. 2 entspricht der Darstellung der Eingabevorrichtung 20 in der Fig. 1b. Die Ermittlung der Kräfte der Eingabevorrichtung 20 gemäß Fig. 2 entspricht der Ermittlung der Kräfte der Eingabevorrichtung 20 gemäß Fig. 1c. In der Fig. 2 können dieselben Kräfte gemäß Fig. 1c gemessen werden. Mittels des ersten Kraftsensors 44 ist folglich eine erste Druckkraft 49 in Z-Richtung 28 messbar.

Fig. 3 zeigt eine schematische Darstellung einer Eingabevorrichtung 20. Die Eingabevorrichtung 20 umfasst eine Halterung 22, eine transparente Scheibe 24 sowie eine Anzeigeeinheit 50 und ist gemäß Fig. 2 ausgestaltet. Der Unterschied der Fig. 3 zu der Fig. 2 besteht darin, dass die Anzeigeeinheit 50 nicht mit der Scheibe 24 verbunden ist bzw. die Scheibe 24 nicht kontaktiert, sondern über mindestens zwei Befestigungselemente 52, 54 in der Halterung 22 der Eingabevorrichtung 20 angeordnet ist. In dieser beispielhaften Ausführungsform wird die Anzeigeeinheit 50 mittels eines ersten Befestigungselements 52 sowie mittels eines zweiten Befestigungselements 54 in der Halterung 22 angeordnet. Die Befestigungselemente 52, 54 sind zum einen an der Anzeigeeinheit 50 angeordnet und zum anderen an einer zweiten, der ersten Seite 25 der Halterung 22 gegenüberliegenden Seite 40 der Halterung 22 angeordnet, wobei die Anzeigeeinheit 50 durch die transparente Scheibe 24 für einen Betrachter sichtbar ist. In einer Weiterentwicklung werden vier Befestigungselemente an der Anzeigeeinheit 50 und an der Halterung 22 angeordnet. Vorzugsweise werden die vier Befestigungselemente jeweils an den Ecken der rechteckig ausgeführten Anzeigeeinheit 50 angeordnet, damit eine sichere Anordnung der Anzeigeeinheit 50 an der Halterung 22 gewährleistet werden kann.

In einer Weiterentwicklung kann auf der Scheibe 24 ein Bedienelement so angeordnet werden, dass das Bedienelement kraftschlüssig mit der Scheibe 24 verbunden ist.

Der Blick von oben auf die Eingabevorrichtung 20 gemäß Fig. 3 entspricht der Darstellung der Eingabevorrichtung 20 in der Fig. 1b. Die Ermittlung der Kräfte der Eingabevorrichtung 20 gemäß Fig. 3 entspricht der Ermittlung der Kräfte der Eingabevorrichtung 20 gemäß Fig. 1c. In der Fig. 3 können dieselben Kräfte gemäß Fig. 1c gemessen werden. Mittels des ersten Kraftsensors 44 ist folglich eine erste Druckkraft 49 in Z-Richtung 28 messbar.

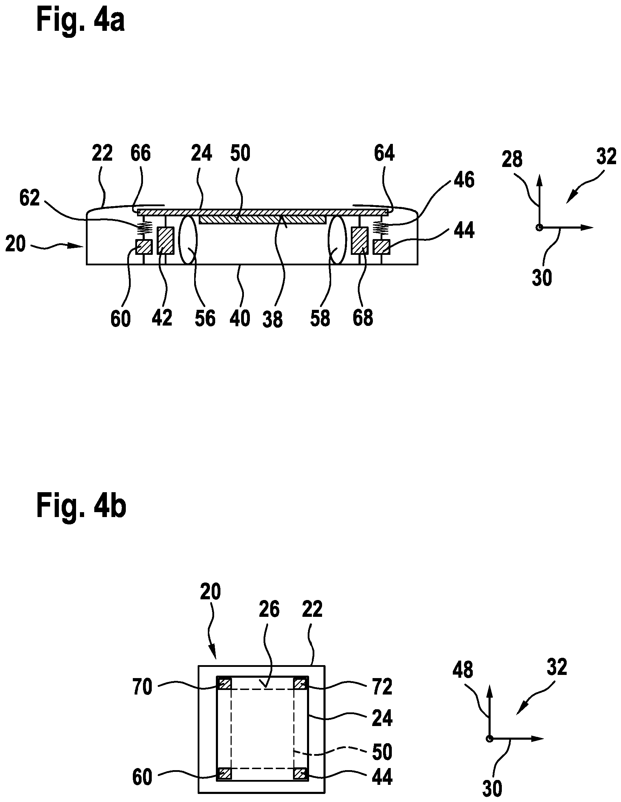

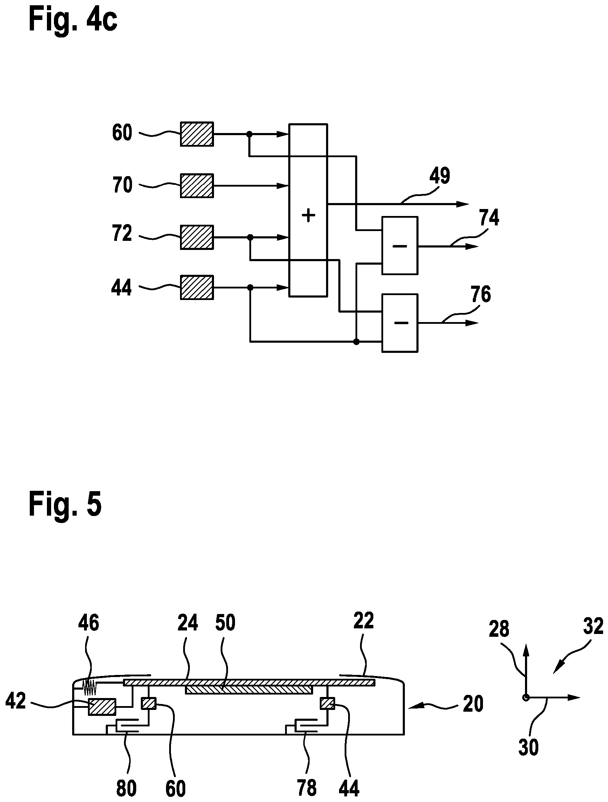

Fig. 4 zeigt eine schematische Darstellung einer Eingabevorrichtung 20. Die Eingabevorrichtung 20 umfasst eine Halterung 22, eine transparente Scheibe 24 sowie eine Anzeigeeinheit 50 und ist gemäß Fig. 2 ausgestaltet. Der Unterschied der Fig. 4a zu der Fig. 2 besteht darin, dass die Scheibe 24 mittels zwei elastischer Lagerelemente 56, 58 gelagert wird. Die elastischen Lagerelemente 56, 58 sind in mindestens eine Richtung elastisch verschiebbar, vorzugsweise in Richtung der Z-Achse 28, und /oder in alle Richtungen elastisch verschiebbar bewegbar bzw. weisen mindestens eine Richtung ein Spiel auf. In einer Weiterentwicklung werden vier elastische Lagerelemente an der Scheibe 24 und an der Halterung 22 angeordnet. Vorzugsweise werden die vier elastischen Lagerelemente jeweils an unterschiedlichen Ecken der rechteckig ausgeführten Scheibe 24 angeordnet, damit eine sichere Anordnung der Scheibe 24 an der Halterung 22 gewährleistet werden kann.

In Fig. 4a wird eine schematische Schnittdarstellung einer Eingabevorrichtung 20 gemäß Fig. 2 von einer Seite dargestellt. In dieser Ausführungsform wird die Scheibe 24 im Unterschied zu der Fig. 2 mittels eines ersten elastischen Lagerelements 56 sowie mittels eines zweiten elastischen Lagerelements 58 in der Halterung 22 angeordnet bzw. gelagert. Die elastischen Lagerelemente 56, 58 sind zum einen an einer zweiten, der ersten Oberfläche 26 der Scheibe 24 gegenüberliegenden Oberfläche 38 der Scheibe 24 angeordnet bzw. befestigt und zum anderen an einer zweiten, der ersten Seite 25, aufweisend die Öffnung, der Halterung 22 gegenüberliegenden Seite 40 der Halterung 22 angeordnet bzw. befestigt. Das erste elastische Lagerelement 56 sowie das zweite elastische Lagerelement 58 sind in dieser Ausführungsform zueinander beabstandet angeordnet, sodass die Scheibe 24 sicher in der Halterung 22 angeordnet ist. Ferner werden die elastischen Lagerelemente 56, 58 so angeordnet, dass eine Anzeigeeinheit 50 auf der, dem Betrachter abgewandten Seite 38 der Scheibe 24 so angeordnet werden kann, dass ein Betrachter die Anzeigeeinheit 50 durch die Scheibe 24 betrachten kann.

Weiterhin ist in der Eingabevorrichtung 20 gemäß Fig. 4a im Unterschied zu Fig. 2 statt eines Kraftsensors zwei und/oder vier Kraftsensoren 44, 60 angeordnet. Die Kraftsensoren 44, 60 werden vorzugsweise zwischen der Scheibe 24 und der Halterung 22 angeordnet. Die Kraftsensoren 44, 60 sind insbesondere zum einen an einer zweiten, der ersten Oberfläche 26 gegenüberliegenden Oberfläche 38 der Scheibe 24 angeordnet bzw. befestigt und zum anderen an einer zweiten, der ersten Seite 25 gegenüberliegenden Seite 40 der Halterung 22 angeordnet bzw. befestigt. Die Kraftsensoren 44, 60 sind in Richtung der Z-Achse angeordnet und ermöglichen folglich eine Messung einer Krafteinwirkung auf die Scheibe 24 in Richtung der Z-Achse. Bringt ein Nutzer bzw. ein Benutzer eine Kraft auf die Scheibe 24 und/oder betätigt ein Nutzer die Scheibe 24, um beispielsweise eine Aktion auszuführen, wird diese Krafteinwirkung des Benutzers mittels der Kraftsensoren 44, 60 gemessen. Ferner wird zu den Kraftsensoren 44, 60 jeweils eine Feder bzw. eine Rückstellfeder 46, 62 in Reihe angeordnet, damit die Scheibe 24 nach einer Betätigung wieder in die Ausgangslage zurückgebracht werden kann. Hierfür wird die erste Rückstellfeder 46 in Reihe mit dem ersten Kraftsensor 44 angeordnet sowie die zweite Rückstellfeder 62 in Reihe mit dem zweiten Kraftsensor 60.

In Fig. 4a werden die Kraftsensoren 44, 60 zueinander beabstandet in der Halterung 22 angeordnet. In dieser Ausgestaltungsform ist der erste Kraftsensor 44 und die erste Rückstellfeder 46 an einem ersten Ende 64 der Scheibe 24 angeordnet sowie der zweite Kraftsensor 60 und die zweite Rückstellfeder 62 an einem, dem ersten Ende 64 der Scheibe 24 gegenüberliegenden, zweiten Ende 66 der Scheibe 24. Mit anderen Worten wird der erste Kraftsensor 44 und der zweite Kraftsensor 60 in einer Richtung entlang der X-Achse 30 zueinander beabstandet angeordnet. Hierdurch sind statt lediglich einer ersten Druckkraft 49 in Richtung der Z-Achse 28 zusätzlich Drehmomente um die Y-Achse 48 und/oder die X-Achse 30 messbar.

Weiterhin ist in der Eingabevorrichtung 20 gemäß Fig. 4a im Unterschied zu Fig. 2 statt eines Aktuators 42 zwei Aktuatoren 42, 68 angeordnet. Die Aktuatoren 42, 68 werden vorzugsweise zwischen der Scheibe 24 und der Halterung 22 angeordnet. Die Aktuatoren 42, 68 sind insbesondere zum einen an einer zweiten, der ersten Oberfläche 26 gegenüberliegenden Oberfläche 38 der Scheibe 24 angeordnet bzw. befestigt und zum anderen an einer zweiten, der ersten Seite 25 gegenüberliegenden Seite 40 der Halterung 22 angeordnet bzw. befestigt. Die Aktuatoren 42, 68 ermöglichen ein haptisches Feedback für einen Benutzer der Eingabevorrichtung 20.

In Fig. 4a werden die Aktuatoren 42, 68 in der Halterung 22 zueinander beabstandet angeordnet. In dieser Ausgestaltungsform ist der erste Aktuator 42 an einem ersten Ende 64 der Scheibe 24 angeordnet sowie der zweite Aktuator 68 an einem, dem ersten Ende 64 der Scheibe 24 gegenüberliegenden zweiten Ende 66 der Scheibe 24 angeordnet. Mit anderen Worten wird der erste Aktuator 42 und der zweite Aktuator 68 in einer Richtung entlang der X-Achse 30 zueinander beabstandet angeordnet. Hierdurch kann eine, für einen Nutzer detailliertere haptische Rückmeldung gewährleistet werden. In einer Weiterentwicklung können vier Aktuatoren an der Scheibe 24 und an der Halterung 22 angeordnet werden. Vorzugsweise werden die vier Aktuatoren jeweils an unterschiedlichen Ecken der rechteckig ausgeführten Scheibe 24 angeordnet, damit einem Nutzer ein detailliertes ein haptisches Feedback gegeben werden kann.

In einer Weiterentwicklung kann auf der Scheibe 24 ein Bedienelement so angeordnet werden, dass das Bedienelement kraftschlüssig mit der Scheibe 24 verbunden ist.

In Fig. 4b wird eine schematische Schnittdarstellung einer Eingabevorrichtung 20 von oben dargestellt, welche gemäß Fig. 1b ausgeführt ist. Ein Betrachter der Eingabevorrichtung 20 in der Fig. 4b würde von vorne auf die erste Oberfläche 26 der Scheibe 24 blicken. In einem Koordinatensystem 32 zeigt die Y-Achse 48 senkrecht nach oben. Die X-Achse 30 des Koordinatensystems 32 zeigt gemäß Fig. 4a nach rechts, in Bezug auf die Blickrichtung eines Nutzers. Die Scheibe 24 in Fig. 4b wird, gemäß Fig. 4a, in der Halterung 22 angeordnet. In Fig. 4b ist weiterhin das Display 50 bzw. die Anzeigeeinheit 50 mittels einer gestrichelten Linie eingezeichnet. Die Linie der Scheibe 24 befindet sich zwischen der äußeren Linie der Halterung 22 und der gestrichelten Linie der Anzeigeeinheit 50.

In Fig. 4b sind ferner vier Kraftsensoren 44, 60, 70, 72 dargestellt, welcher unterhalb der Scheibe 24 in der Eingabevorrichtung 20 angeordnet sind. Die Kraftsensoren 44, 60, 70, 72 sind für einen Betrachter, welcher auf die Eingabevorrichtung 20 blickt, im fertig montierten Zustand nicht sichtbar. In dieser Ausführungsform sind die vier Kraftsensoren 44, 60, 70, 72 lediglich zur besseren Darstellung eingezeichnet. Mittels der vier Kraftsensoren 44, 60, 70, 72 kann eine Krafteinwirkung auf die Scheibe 24 gemessen werden.

In dieser vorteilhaften Ausgestaltung ist die Scheibe 24 als ein Rechteck ausgebildet, wobei der erste Kraftsensor 44 in einer ersten Ecke der Scheibe 24 angeordnet ist, der zweite Kraftsensor 60 in einer zweiten Ecke der Scheibe 24, der dritte Kraftsensor 70 in einer dritten Ecke der Scheibe 24 sowie der vierte Kraftsensor 72 in einer vierten Ecke der Scheibe 24. Hierdurch sind statt lediglich einer ersten Druckkraft 49 in Richtung der Z-Achse 28 zusätzlich Drehmomente um die Y-Achse 48und/oder die X-Achse 30 messbar.

Fig. 4c gibt einen Überblick, welche Kräfte mittels der, in der Eingabevorrichtung 20 gemäß Fig. 4b angeordneten Sensoren, in dieser Ausführungsform mittels der vier Kraftsensoren 44, 60, 70, 72, messbar sind. Insbesondere ist zum einen eine erste Druckkraft 49 in Z-Richtung 28 bzw. in Richtung der Z-Achse 28 messbar, indem die gemessenen Kräfte der vier Kraftsensoren 44, 60, 70, 72 zusammen gezählt bzw. addiert werden. Ferner kann ein erstes Drehmoment 74 um die Y-Achse 48 ermittelt werden. Hierfür werden die gemessene Kraft des zweiten Kraftsensors 60 und die gemessene Kraft des ersten Kraftsensors 44 voneinander abgezogen und anschließend in ein erstes Drehmoment 74 um die Y-Achse 48 umgerechnet. Alternativ oder zusätzlich kann die gemessene Kraft des dritten Kraftsensors 70 und die gemessene Kraft des vierten Kraftsensors 72 voneinander abgezogen werden, um ein erstes Drehmoment 74 um die Y-Achse 48 zu ermitteln. Weiterhin kann ein zweites Drehmoment 76 um die X-Achse 30 ermittelt werden. Hierfür werden die gemessene Kraft des ersten Kraftsensors 44 sowie die gemessene Kraft des vierten Kraftsensors 72 voneinander abgezogen und anschließend in ein zweites Drehmoment 76 um die X-Achse 30 umgerechnet. Alternativ oder zusätzlich kann die gemessene Kraft des zweiten Kraftsensors 60 und die gemessene Kraft des dritten Kraftsensors 70 voneinander abgezogen werden, um ein zweites Drehmoment 76 um die X-Achse 30 zu ermitteln.

Die mittels der Kraftsensoren gemessenen Kräfte werden zur Ansteuerung einer externen Einheit, beispielsweise eines Steuergeräts und/oder einer Anzeigeeinheit bezüglich ihrer Richtung, ihres Betrages sowie ihrer Achse verarbeitet.

Fig. 5 zeigt eine schematische Darstellung einer Eingabevorrichtung 20. Die Eingabevorrichtung 20 umfasst eine Halterung 22, eine transparente Scheibe 24 sowie eine Anzeigeeinheit 50 und ist gemäß Fig. 4 ausgestaltet. Der Unterschied der Fig. 5 zu der Fig. 4a besteht darin, dass der erste Kraftsensor 44 in Reihe angeordnet wird mit einem dritten linearen Lager 78 bzw. einem dritten Führungselement 78, wobei das dritte Führungselement 78 lediglich in eine Richtung bewegt werden kann. In dieser beispielhaften Ausgestaltung kann sich das dritte lineare Lagerelement 78 in Richtung der X-Achse 30 bewegen bzw. das dritte lineare Lagerelement 78 bewirkt, dass die Scheibe 24 in Richtung der X-Achse 30 verschiebbar ist. Das dritte lineare Lager 78 ist weder in Richtung der Z-Achse 28 noch in Richtung der Y-Achse 48 verschiebbar. Ein weiterer Unterschied der Fig. 5 zu der Fig. 4 besteht darin, dass der zweite Kraftsensor 60 in Reihe mit einem vierten linearen Lager 80 bzw. einem vierten Führungselement 80 angeordnet wird, wobei das vierte Führungselement 80 lediglich in eine Richtung bewegt werden kann. In dieser beispielhaften Ausgestaltung kann sich das vierte lineare Lagerelement 80 in Richtung der X-Achse 30 bewegen bzw. das vierte lineare Lagerelement 80 bewirkt, dass die Scheibe 24 in Richtung der X-Achse 30 verschiebbar ist. Das vierte lineare Lager 80 ist weder in Richtung der Z-Achse 28 noch in Richtung der Y-Achse 48 verschiebbar. Das Spiel der beiden Lagerelemente 78, 80 stellt sicher, dass ein Aktuator 42 eine haptische Rückmeldung erzeugen kann, indem der Aktuator 42 die Scheibe 24 zum Schwingen bringt. Für diese Schwingungen der Scheibe 24 ist es vorteilhaft, dass die Scheibe 24 mittels des einen oder der mehreren Führungselemente 78, 80 in der Halterung 22 so angeordnet ist, dass die Scheibe 24 in die mindestens eine Richtung, in welche die Schwingungen von dem Aktuator 42 angeregt werden, bewegbar ist. In dieser Ausführungsform ist der Aktuator 42 folglich in X-Richtung 30 angeordnet. Mit anderen Worten ist der Aktuator 42 so angeordnet, dass die Scheibe 24 mit Schwingungen in X Richtung angeregt werden kann, um eine haptisches Feedback zu erzeugen. Die Kraftsensoren 44, 60 sind in Richtung der Z-Achse angeordnet und ermöglichen folglich eine Messung einer Krafteinwirkung auf die Scheibe 24 in Richtung der Z-Achse.

In dieser beispielhaften Ausführungsform wird die erste Rückstellfeder 46 ebenfalls in Richtung der X-Achse 30 angeordnet, dass die Scheibe 24 bei einer Anregung durch den Aktuator 42, insbesondere durch Schwingungen, wieder in die Ausgangslage zurückgebracht werden kann.

Der Blick von oben auf die Eingabevorrichtung 20 entspricht der Darstellung der Eingabevorrichtung 20 in der Fig. 4b. Die Ermittlung der Kräfte der Eingabevorrichtung 20 gemäß Fig. 5 entspricht der Ermittlung der Kräfte der Eingabevorrichtung 20 gemäß Fig. 4, bzw. gemäß Fig. 4c.

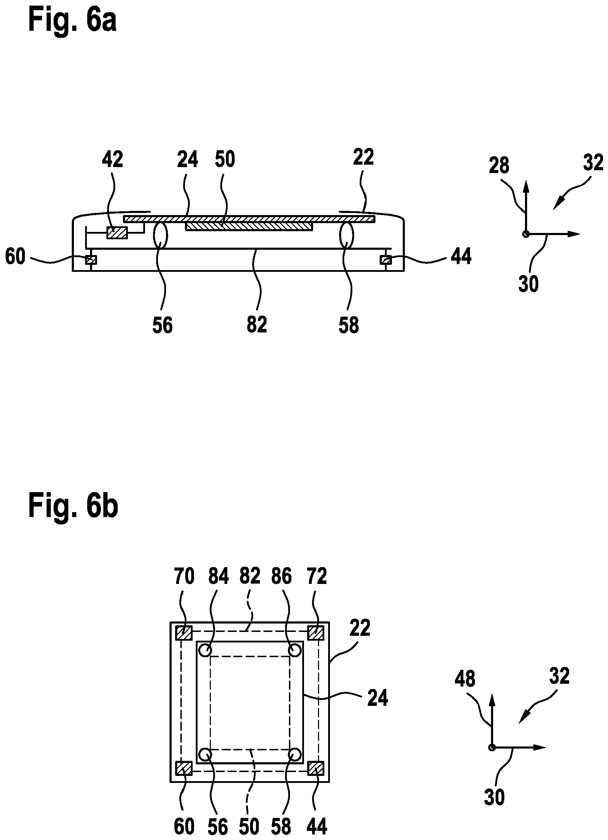

In Fig. 6 wird eine schematische Darstellung einer Eingabevorrichtung 20 gezeigt. Die Eingabevorrichtung 20 umfasst eine Halterung 22, eine transparente Scheibe 24 sowie eine Anzeigeeinheit 50 und ist gemäß Fig. 4 ausgestaltet. Der Unterschied der Fig. 6a zu der Fig. 4a besteht darin, dass in dieser Ausführungsform eine weitere, zweite Scheibe 82 in der Eingabevorrichtung 20 angeordnet wird, wobei die weitere, zweite Scheibe 82 parallel zu der ersten Scheibe 24 angeordnet ist. Die elastischen Lagerelemente 56, 58 sind zum einen an einer zweiten, der ersten Oberfläche 26 der Scheibe 24 gegenüberliegenden Oberfläche 38 der Scheibe 24 angeordnet bzw. befestigt und zum anderen an der zu der ersten Scheibe 24 parallel angeordneten zweiten, weiteren Scheibe 82. Die zweite, weitere Scheibe 82 wird weiterhin mit einem Aktuator 42 verbunden, wobei der Aktuator weiterhin mit der Scheibe 24 verbunden ist. Der Aktuator 42 wird in Richtung der X-Achse 30 angeordnet, sodass der Aktuator 42 Schwingungen in Richtung der X-Achse 30 erzeugen kann.

Die weitere, zweite Scheibe 82 weist vorteilhafterweise eine L-Form als Grundfläche auf, wobei ein erster Teil der weiteren, zweiten Scheibe 82 parallel zu der ersten Scheibe 24 angeordnet ist. Der zweite Teil der L-förmigen weiteren, zweiten Scheibe 82 steht insbesondere senkrecht zu dem ersten Teil der weiteren, zweiten Scheibe 82 und zeigt in Richtung der ersten Scheibe 24. Der Aktuator 42 ist zum einen an der ersten Scheibe 24 und zum anderen an dem zweiten Teil der L-förmigen weiteren, zweiten Scheibe 82 angeordnet.

Weiterhin sind in der Eingabevorrichtung 20 gemäß Fig. 6a zwei und/oder vier Kraftsensoren 44, 60 in Richtung der Z-Achse 28 angeordnet. Die Kraftsensoren 44, 60 werden vorzugsweise zwischen der zweiten, weiteren Scheibe 82, insbesondere dem ersten Teil der weiteren, zweiten Scheibe 82, und der Halterung 22 angeordnet. Die Kraftsensoren 44, 60 sind in Richtung der Z-Achse angeordnet und ermöglichen folglich eine Messung einer Krafteinwirkung auf die Scheibe 24 in Richtung der Z-Achse. Der erste Kraftsensor 44 und der zweite Kraftsensor 60 sind insbesondere in einer Richtung entlang der X-Achse 30 mit einem Abstand zueinander angeordnet.

Hierdurch sind statt lediglich einer Druckkraft in Richtung der Z-Achse 28 zusätzlich Drehmomente um die Y-Achse und/oder die X-Achse 30 messbar.

Der Blick von oben auf die Eingabevorrichtung 20 gemäß Fig. 6b entspricht der Darstellung der Eingabevorrichtung 20 gemäß der Fig. 4b. In Fig. 6b ist zusätzlich die zweite, weitere Scheibe 82 mittels einer gestrichelten Linie eingezeichnet. Die gestrichelte Linie 82 der zweiten, weiteren Scheibe 82 befindet sich zwischen der äußeren Linie der Halterung 22 und der Linie der Scheibe 24. Ferner sind in der Fig. 6b ein erstes elastisches Lagerelement 56, ein zweites elastisches Lagerelement 58, ein drittes elastisches Lagerelement 84 sowie ein viertes elastisches Lagerelement 86 dargestellt. Die Lagerelemente 56, 58, 84, 86 sind jeweils an den Ecken der rechteckig ausgeführten ersten Scheibe 24 angeordnet.

Die Ermittlung der Kräfte der Eingabevorrichtung 20 gemäß Fig. 6 entspricht der Ermittlung der Kräfte der Eingabevorrichtung 20 gemäß Fig. 4, bzw. gemäß Fig. 4c.

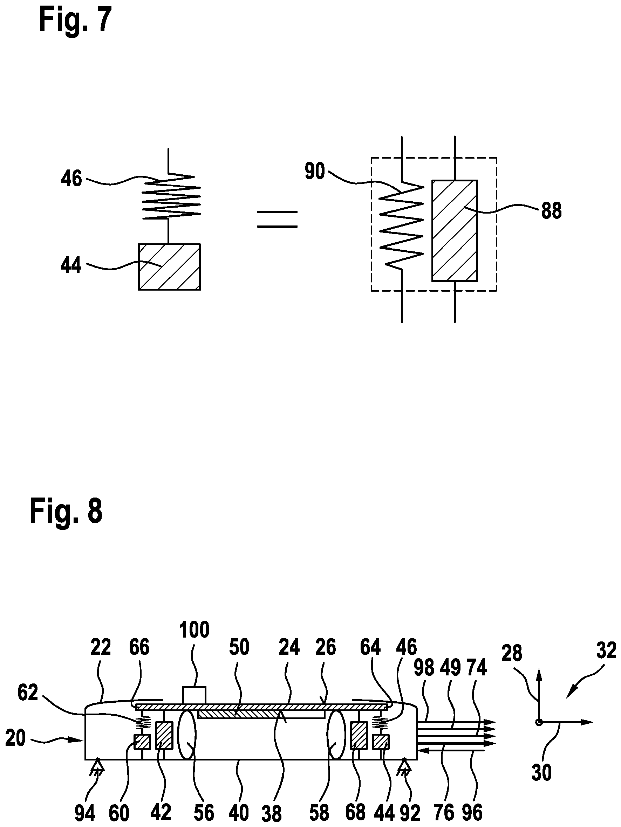

Fig. 7 zeigt eine schematische Darstellung von Sensoren, wobei ein Kraftsensor 44 mit einem Wegsensor 88 verglichen wird.

Der Kraftsensor 44 ermöglicht eine Messung einer Kraft bzw. einer Krafteinwirkung, beispielsweise zwischen zwei Elementen. Wird eine Kraft auf den ersten Kraftsensor 44 ausgeübt und/oder werden die zwei Elemente beispielsweise zusammengedrückt, wird diese Krafteinwirkung bzw. der Wert der Kraft mittels des Kraftsensors 44 gemessen. Ferner wird zu dem Kraftsensor 44 eine Feder bzw. eine erste Rückstellfeder 46 in Reihe angeordnet, damit beispielsweise die Elemente nach einer Betätigung bzw. nach einem Zusammendrücken wieder in die Ausgangslage zurückgebracht werden können.

Der Wegsensor 88 ermöglicht eine Messung einer Verschiebung bzw. einer Bewegung, beispielsweise eine Verschiebung bzw. eine Bewegung zweier Elemente. Wird auf den Wegsensor 88 gedrückt, wird die Verschiebung mittels des Wegsensors 88 gemessen, wodurch folglich auch der Wegsensor 88 zusammengedrückt wird. Ferner wird parallel zu dem Wegsensor 88 eine Feder bzw. eine dritte Rückstellfeder 90 zwischen den zwei Elementen angeordnet, damit beispielsweise die Elemente nach einer Betätigung wieder in die Ausgangslage zurückgebracht werden können.

Der Kraftsensor 44 in Reihe mit der ersten Rückstellfeder 46 sowie der Wegsensor 88 mit der parallel zu dem Wegsensor 88 angeordneten dritten Rückstellfeder 90 können alternativ zueinander verwendet werden. Folglich kann Anstelle eines Kraftsensors 44 in Reihe mit der ersten Rückstellfeder 46 in den Ausführungen der Eingabevorrichtung 20 ein Wegsensor 88 mit einer parallel dazu angeordneten dritten Rückstellfeder 90 verwendet werden, wobei dann anstelle einer Krafteinwirkung eine Verschiebung zweier Elemente entlang der Achse des Wegsensors 88 gemessen werden kann.

Fig. 8 zeigt eine schematische Darstellung einer Eingabevorrichtung 20 gemäß einem der vorherigen ausgeführten Ausführungsformen. Die Eingabevorrichtung 20 ist hier gemäß Fig. 4a ausgeführt, jedoch kann die Eingabevorrichtung 20 auch gemäß Fig. 1, Fig. 2, Fig. 3, Fig. 5 oder Fig. 6 oder einer Kombination mehrerer Ausführungsbeispiele ausgeführt sein.

Vorzugsweise wird die Halterung 22 mittels zweier Lager und/oder Festlager 92, 94 angeordnet. Beispielsweise kann die Halterung 22 und somit die Eingabevorrichtung 20 mittels der Festlager 92, 94 insbesondere an einem weiteren Element und/oder an einer weiteren Halterung, zum Beispiel in einem Fahrzeug angeordnet werden. In dieser Ausführungsform wird die Halterung mittels eines ersten Lagerelements 92 sowie mittels eines zweiten Lagerelements 94 angeordnet.

Mittels des zweiten Pfeils 96 werden Informationen dargestellt, beispielsweise Steuersignale, insbesondere für den Aktuator, welche in die Eingabevorrichtung 20 hineinfließen. Ferner fließen Informationen aus der Eingabevorrichtung 20 heraus, beispielsweise um eine Anzeigevorrichtung und/oder weitere Elemente zu steuern. Informationen, die mittels der Eingabevorrichtung 20 generiert werden, sind beispielsweise eine ermittelte bzw. gemessene erste Druckkraft 49 in Richtung der Z-Achse 28, ein ermitteltes erstes Drehmoment 74 um die Y-Achse 48, ein ermitteltes zweites Drehmoment 76 um die X-Achse 30 sowie gegebenenfalls eine ermittelte Information 98 bezüglich einer Position einer Berührung der Scheibe 24 eines Benutzers der Eingabevorrichtung 20, falls die Scheibe 24 als ein Touchpad ausgeführt ist.

Ist die Eingabevorrichtung 20 gemäß Fig. 1, Fig. 2 oder Fig. 3 ausgeführt, kann vorzugsweise eine Information über eine erste Druckkraft 49 in Richtung der Z-Achse 28 mittels der Eingabevorrichtung 20 ermittelt werden sowie gegebenenfalls eine Information 98 bezüglich der Position einer Berührung der Scheibe 24 eines Benutzers der Eingabevorrichtung 20, falls die Scheibe 24 als ein Touchpad ausgeführt ist.

Die ermittelten Informationen der Eingabevorrichtung 20 können an eine Anzeigevorrichtung, an ein Steuergerät, an ein Infothemensystem, insbesondere eines Kraftfahrzeugs, übermittelt werden.

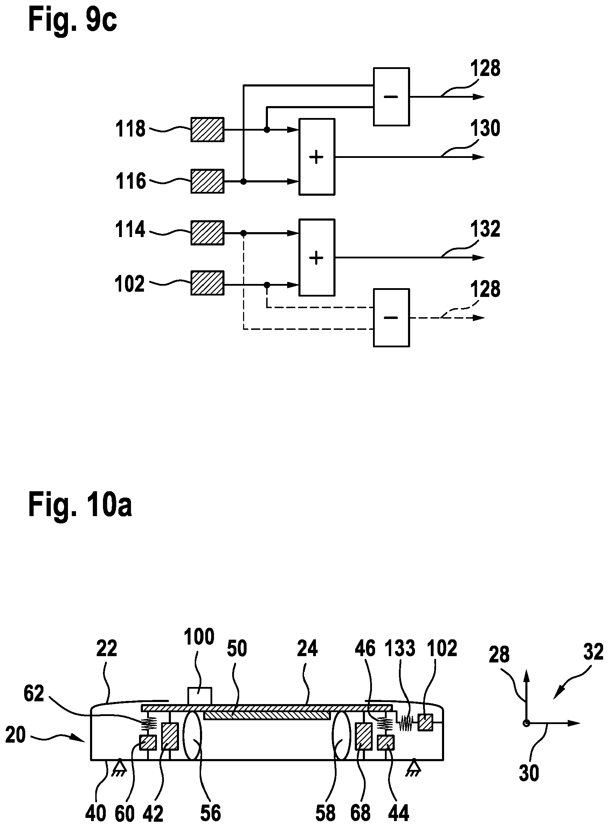

In Fig. 9 wird eine schematische Darstellung einer Eingabevorrichtung 20 gezeigt. Die Eingabevorrichtung 20 ist hier gemäß Fig. 4a ausgeführt, jedoch kann die Eingabevorrichtung 20 auch gemäß Fig. 1, Fig. 2, Fig. 3, Fig. 5 oder Fig. 6 oder einer Kombination mehrerer Ausführungsbeispiele ausgeführt sein.

Ferner wird in Fig. 9a auf der Scheibe 24 der Eingabevorrichtung 20 ein Bedienelement 100 bzw. ein greifbares Objekt 100 angeordnet, wobei das Bedienelement 100 derart an der Scheibe 24 angeordnet ist, dass das Bedienelement 100 kraftschlüssig mit der Scheibe 24 verbunden ist. Folglich bewirkt eine Krafteinwirkung auf das Bedienelement 100 eine Krafteinwirkung auf die Scheibe 24 und/oder zugleich auf die Scheibe 24 und die Halterung 22. In einer vorteilhaften Ausgestaltung ist die kraftschlüssige Verbindung des Bedienelements 100 mit der Scheibe 24 eine Klebeverbindung. In einer Weiterentwicklung können jedoch auch andere Verbindungen beispielsweise Klipsverbindungen und/oder Schrauben zur Anordnung des Bedienelements 100 an der Scheibe 24 verwendet werden.

In einer Weiterentwicklung sind die Scheibe 24 und/oder das Bedienelement 100 transparent. Hierdurch kann beispielsweise ein Nutzer der Eingabevorrichtung 20 durch die Scheibe 24 und/oder durch das Bedienelement 100 hindurch sehen. Vorteilhafterweise kann ein Bild und/oder eine Anzeigeeinheit unter der Scheibe 24 angebracht werden, wobei der Nutzer das Bild und/oder die Anzeigeeinheit durch eine vorzugsweise transparente Scheibe und/oder durch ein transparentes Bedienelement wahrnehmen kann.

In dieser Ausführungsform ist die Schiebe 24 so in der Halterung 22 angeordnet, dass eine Krafteinwirkung auf das Bedienelement 100 in Richtung der Z-Achse 28 insbesondere eine Krafteinwirkung auf die Scheibe 24 in Richtung der Z-Achse 28 bewirkt. Eine Krafteinwirkung auf das Bedienelement 100 in Richtung der Y-Achse 48 bewirkt insbesondere eine Krafteinwirkung zugleich auf die Scheibe 24 und die Halterung 22 in Richtung der Y-Achse 48. Eine Krafteinwirkung auf das Bedienelement 100 in Richtung der X-Achse 30 bewirkt insbesondere eine Krafteinwirkung zugleich auf die Scheibe 24 und die Halterung 22 in Richtung der X-Achse 30.

Alternativ kann eine Verschiebung des Bedienelements 100 in Richtung der Z-Achse 28 insbesondere eine Verschiebung der Scheibe 24 in Richtung der Z-Achse 28 bewirken. Eine Verschiebung des Bedienelements 100 in Richtung der Y-Achse 48 kann insbesondere eine Verschiebung zugleich der Scheibe 24 und der Halterung 22 in Richtung der Y-Achse 48 bewirken. Eine Verschiebung des Bedienelements 100 in Richtung der X-Achse 30 kann insbesondere eine Verschiebung zugleich der Scheibe 24 und der Halterung 22 in Richtung der X-Achse 30 bewirken.

Zusätzlich zu den Kraftsensoren in der Eingabevorrichtung 20 wird außerhalb der Eingabevorrichtung 20 ein fünfter Kraftsensor 102 an der Halterung 22 angeordnet. Der fünfte Kraftsensor 102 ist in Richtung der X-Achse 30 angeordnet bzw. in X-Richtung 30. Der fünfte Kraftsensor 102 ist vorzugsweise an der Halterung 22 sowie einem weiteren Lager 104, insbesondere an einem festen Lager, angeordnet. Wird nun, beispielsweise durch einen Benutzer der Eingabevorrichtung 20, eine Kraft in Richtung der X-Achse 30 auf das Bedienelement 100 gebracht, welche eine Krafteinwirkung zugleich auf die Scheibe 24 und die Halterung 22 bewirkt, so kann diese Kraft bzw. die Krafteinwirkung mittels des fünften Kraftsensors 102 gemessen werden. Wird anstelle des fünften Kraftsensors 102 ein Wegesensor verwendet, kann eine Verschiebung der zugleich der Halterung 22 und der Scheibe 24 sowie des Bedienelements 100 in X-Richtung 30 gemessen werden. Hierfür ist die Halterung 22 mittels elastischer Lagerelemente gelagert. In Fig. 9a sind ein fünftes Lagerelement 106 sowie ein sechsten Lagerelement 108 sichtbar, welche zueinander beabstandet an der Halterung 22 angeordnet sind. Die elastischen Lagerelemente 106, 108 werden an der Unterseite, mit anderen Worten an der, dem Betrachter abgewandten Seite und/oder dem Bedienelement 100 abgewandten Seite, an der Halterung 22 angeordnet.

Die Lagerelemente 106, 108 können insbesondere in mindestens zwei Richtungen und/oder allseitig elastisch bewegbar sein.

Der Blick von oben auf die Eingabevorrichtung 20 gemäß Fig. 9b entspricht der Darstellung der Eingabevorrichtung 20 in der Fig. 4b. Es werden dargestellt die Halterung 22, die Anzeigeeinheit 50 sowie die Scheibe 24, wobei die Scheibe 24 in der Halterung angeordnet ist. Das Bedienelement 100 ist auf der Scheibe 24 bzw. auf der ersten Oberfläche 26 der Scheibe 24 angeordnet. In dieser Ausführungsform ist das Bedienelement 100 nahe einer Ecke der rechteckigen Scheibe 24 angeordnet. Ferner sind die Lager 106, 108, 110, 112 dargestellt, mittels welcher die Halterung 22 gelagert wird. In dieser Ausführungsform wird die Halterung 22 mittels eines fünften Lagerelements 106, mittels eines sechsten Lagers 108, mittels eines siebten Lagers 110 sowie mittels eines achten Lagers 112, beispielsweise an einem weiteren Element, beispielsweise an einer weiteren Halterung und/oder an einem Fahrzeug, angeordnet. Vorzugsweise werden die elastischen Lagerelemente 106, 108, 110, 112 an der Halterung 22 zueinander beabstandet angeordnet, wobei in dieser Ausführungsform die elastischen Lagerelemente 106, 108, 110, 112 jeweils in den Ecken der rechteckig ausgeführten Halterung 22 angeordnet sind.

Ferner sind zusätzlich zu den Kraftsensoren innerhalb der Eingabevorrichtung 20 weitere Kraftsensoren 102, 114, 116, 118 außerhalb der Eingabevorrichtung 20 an der Halterung 22 angeordnet. In dieser Ausgestaltung ist ein fünfter Kraftsensor 102 sowie ein sechster Kraftsensor 114 in Richtung der X-Achse 30 angeordnet. Der fünfte Kraftsensor 102 sowie der sechste Kraftsensor 114 sind an einer Seite der Halterung 22 zueinander beabstandet angeordnet. In dieser Ausführungsform weist die Halterung 22 eine rechteckige Form auf, wobei die Kraftsensoren 102, 114 jeweils an den Ecken der Halterung 22 angeordnet sind.

Weiterhin sind ein siebter Kraftsensor 116 sowie ein achter Kraftsensor 118 in Richtung der Y-Achse 48 angeordnet. Der siebte Kraftsensor 116 sowie der achte Kraftsensor 118 sind an einer Seite der Halterung 22 zueinander beabstandet angeordnet. In dieser Ausführungsform weist die Halterung 22 eine rechteckige Form auf, wobei die Kraftsensoren 116, 118 jeweils an den Ecken der Halterung angeordnet sind. Die zwei Seiten der Halterung 22, an welchen die Kraftsensoren 102, 114, 116, 118 angebracht sind vorzugsweise senkrecht zueinander angeordnet.

Die Kraftsensoren 102, 114, 116, 118 werden jeweils mittels eines Lagers, hier eines Festlagers, an einer weiteren Halterung fixiert. Vorzugsweise wird der fünfte Kraftsensor 102 zwischen der Halterung 22 und einem weiteren Lager 120, der sechste Kraftsensor 114 zwischen der Halterung 22 einem weiteren Lager 122, der siebte Kraftsensor 116 zwischen der Halterung 22 und einem weiteren Lager 124 sowie der achte Kraftsensor 118 zwischen der Halterung 22 und einem weiteren Lager 126 angeordnet.

Zusätzlich oder alternativ zu den messbaren Kräften mittels der Kraftsensoren innerhalb der Eingabevorrichtung 20 gemäß Fig. 4c und/oder Fig. 1c, werden in Fig. 9c die Kräfte dargestellt, die mittels der weiteren Kraftsensoren 102, 114, 116, 118 außerhalb der Eingabevorrichtung 20 gemäß Fig. 9a zusätzlich messbar sind.

Beispielsweise kann ein drittes Drehmoment 128 um die Z-Achse 28 ermittelt werden.

Hierfür werden die gemessene Kraft des siebten Kraftsensors 116 in Richtung der Y-Achse 48 und die gemessene Kraft des achten Kraftsensors 118 in Richtung der Y-Achse 48 voneinander abgezogen und anschließend in ein drittes Drehmoment 128 um die Z-Achse 28 umgerechnet. Alternativ oder zusätzlich kann die gemessene Kraft des fünften Kraftsensors 102 in Richtung der X-Achse 30 und die gemessene Kraft des sechsten Kraftsensors 114 in Richtung der X-Achse 30 voneinander abgezogen werden, um ein drittes Drehmoment 128 um die Z-Achse 28 zu ermitteln. Ferner ist eine zweite Druckkraft 130 in Y-Richtung 48 bzw. in Richtung der Y-Achse 48 messbar, indem die gemessenen Kräfte der zwei Kraftsensoren 116, 118, welche in Richtung der Y-Achse 48 angeordnet sind, folglich die gemessene Kraft des siebten Kraftsensors 116 und die gemessene Kraft des achten Kraftsensors 118, zusammen gezählt bzw. addiert werden. Eine dritte Druckkraft 132 in X-Richtung 30 bzw. in Richtung der X-Achse 30 messbar, indem die gemessenen Kräfte der zwei Kraftsensoren 102, 114, welche in Richtung der X-Achse 30 angeordnet sind, folglich die gemessene Kraft des fünften Kraftsensors 102 und die gemessene Kraft des sechsten Kraftsensors 114, zusammen gezählt bzw. addiert werden.

Die mittels der Kraftsensoren gemessenen Kräfte werden zur Ansteuerung einer externen Einheit, beispielsweise eines Steuergeräts und/oder einer Anzeigeeinheit bezüglich ihrer Richtung, ihres Betrages sowie ihrer Achse verarbeitet.

Die Auswertung der gemessenen Kräfte erfolgt demnach nach trigonometrischen Gesetzen. Wird das Bedienelement 100 in der Fig. 9b, zum Beispiel durch einem Benutzer, in Richtung der X-Achse 30 verschoben bzw. gedrückt, so bewirkt dies eine Krafteinwirkung zugleich auf die Scheibe 24 und auf die Halterung 22 und folglich wird eine Kraft mittels des fünften Kraftsensors 102 sowie mittels des sechsten Kraftsensors 114 gemessen. Werden diese beiden gemessenen Kräfte addiert, so folgt daraus die ermittelte, gesamte Druckkraft 132 in Richtung der X-Achse 30. Mittels dieser ermittelten Druckkraft 132 kann folglich eine Aktion ausgeführt werden, beispielsweise kann auf einer Anzeigevorrichtung 50 ein Bild verschoben und/oder hervorgehoben werden. Wird das Bedienelement 100 in der Fig. 9b in Richtung der Y-Achse 48 verschoben bzw. gedrückt, so bewirkt dies eine Krafteinwirkung zugleich auf die Scheibe 24 und auf die Halterung 22 und folglich wird eine Kraft mittels des siebten Kraftsensors 116 sowie mittels des achten Kraftsensors 118 gemessen. Werden diese beiden gemessenen Kräfte addiert, so folgt daraus die ermittelte, gesamte Druckkraft 130 in Richtung der Y-Achse 48. Mittels dieser ermittelten Druckkraft 130 kann folglich eine Aktion ausgeführt werden, beispielsweise kann auf einer Anzeigevorrichtung ein Bild verschoben und/oder hervorgehoben werden.

Wirkt eine Kraft schräg auf das Bedienelement 100 bzw. wird das Bedienelement 100 schräg verschoben, treten folglich Kräfte sowohl in die Richtung der X-Achse 30 als auch Kräfte in die Richtung der Y-Achse 48 auf und/oder das Bedienelement 100 wird sowohl in die Richtung der X-Achse 30 als auch in die Richtung der Y-Achse 48 verschoben. Mittels des Verhältnisses der Kräfte sowohl in die Richtung der X-Achse 30 als auch der Kräfte in die Richtung der Y-Achse 48, welche mittels der Kraftsensoren gemessen werden, und/oder der Verschiebung sowohl in die Richtung der X-Achse 30 als auch in die Richtung der Y-Achse 48, kann insbesondere ein Winkel der Krafteinwirkung und/oder der Verschiebung ermittelt werden. Zur Berechnung des Winkels der Krafteinwirkung und/oder der Verschiebung kann beispielsweise die folgende Formel verwendet werden:

$$Winkel(Kraftrichtung\ in\ XY-Ebene)$$
$$= \arctan\left(\frac{Gesamtkraft\ in\ Richtung\ der\ X-Achse}{Gesamtkraft\ in\ Richtung\ der\ Y-Achse}\right)$$

Mittels der ermittelten Kräfte sowie des ermittelten Winkels sind kraft- und winkelproportionale Eingaben möglich. Hierdurch kann beispielsweise ein Bildschirmobjekt, beispielsweise ein Mauszeiger oder ein Cursor, in eine bestimmte Richtung auf einer Anzeigeeinheit bewegt bzw. verschoben werden.

Alternativ oder zusätzlich zu den Kraftsensoren und/oder den Wegsensoren können auch optische Näherungssensoren verwendet werden. In einer Weiterentwicklung können die Kraftsensoren und/oder die Wegsensoren und/oder die optischen Näherungssensoren in die elastischen Lagerelemente integriert werden. Beispielsweise wären auch Wägezellen mit Dehnungsmessstreifen verwendbar.

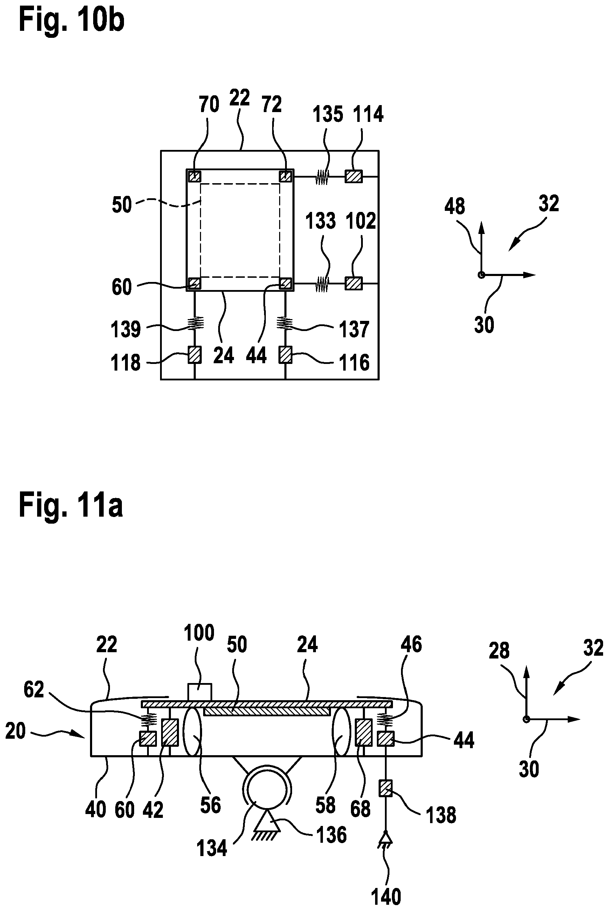

Fig. 10 zeigt eine vorteilhafte Eingabevorrichtung 20 mit einem Bedienelement 100 gemäß Fig. 9. Im Unterschied zur Fig. 9a werden in Fig. 10a die weiteren Kraftsensoren 102, 114, 116, 118 anstelle außerhalb der Eingabevorrichtung 20 an der Halterung 22, in bzw. innerhalb der Eingabevorrichtung 20 an der Halterung 22 und an der Scheibe 24, bzw. zwischen der Halterung 22 und der Scheibe 24 angeordnet. In dieser Ausgestaltung ist ein fünfter Kraftsensor 102 in Richtung der X-Achse 30 zwischen der Scheibe 24 und der Halterung 22 angeordnet. Ferner wird eine Feder 133 bzw. eine Rückstellfeder 133 in Reihe zu dem fünften Kraftsensor 102 angeordnet.

Der Blick von oben auf die Eingabevorrichtung 20 gemäß Fig. 10b entspricht der Darstellung der Eingabevorrichtung 20 in der Fig. 9b. Anstelle der weiteren Kraftsensoren 102, 114, 116, 118 außerhalb der Eingabevorrichtung 20 an der Halterung 22 werden die weitere Kraftsensoren 102, 114, 116, 118 in der Eingabevorrichtung 20 an der Halterung 22 und an der Scheibe 24, bzw. zwischen der Halterung 22 und der Scheibe 24 angeordnet. In dieser Ausgestaltung ist ein fünfter Kraftsensor 102 sowie ein sechster Kraftsensor 114 in Richtung der X-Achse 30 zwischen der Scheibe 24 und der Halterung 22 angeordnet. Der fünfte Kraftsensor 102 sowie der sechste Kraftsensor 114 sind an einer Seite der Halterung 22 zueinander beabstandet angeordnet. In dieser Ausführungsform weist die Halterung 22 eine rechteckige Form auf, wobei die Kraftsensoren 102, 114 jeweils an den Ecken der Halterung 22 angeordnet sind. Ferner wird eine Feder 133 bzw. eine Rückstellfeder 133 in Reihe zu dem fünften Kraftsensor 102 angeordnet sowie eine weitere Feder 135 bzw. eine weitere Rückstellfeder 135 in Reihe zu dem sechsten Kraftsensor 114 angeordnet.

Weiterhin sind ein siebter Kraftsensor 116 sowie ein achter Kraftsensor 118 in Richtung der Y-Achse 48 zwischen der Scheibe 24 und der Halterung 22 angeordnet. Der siebte Kraftsensor 116 sowie der achte Kraftsensor 118 sind an einer Seite der Halterung 22 zueinander beabstandet angeordnet. In dieser Ausführungsform weist die Halterung 22 eine rechteckige Form auf, wobei die Kraftsensoren 116, 118 jeweils an den Ecken der Halterung angeordnet sind. Die zwei Seiten der Halterung 22, an welchen die Kraftsensoren 102, 114, 116, 118 angebracht sind vorzugsweise senkrecht zueinander. Ferner wird eine Feder 137 bzw. eine Rückstellfeder 137 in Reihe zu dem siebten Kraftsensor 116 angeordnet sowie eine weitere Feder 139 bzw. eine weitere Rückstellfeder 139 in Reihe zu dem achten Kraftsensor 118 angeordnet.

Die Ermittlung der Kräfte der Eingabevorrichtung 20 gemäß Fig. 10, folglich Fig. 10a und Fig. 10b, entspricht der Ermittlung der Kräfte der Eingabevorrichtung 20 gemäß Fig. 9, bzw. gemäß Fig. 9c.

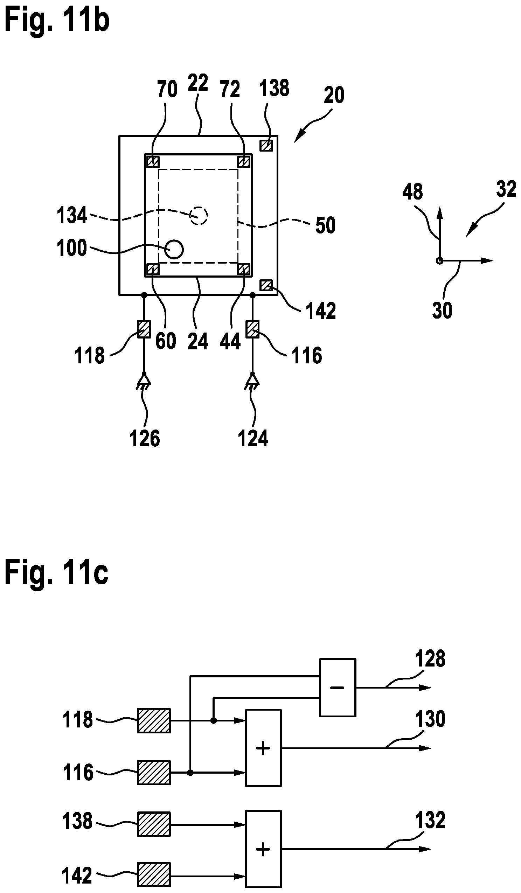

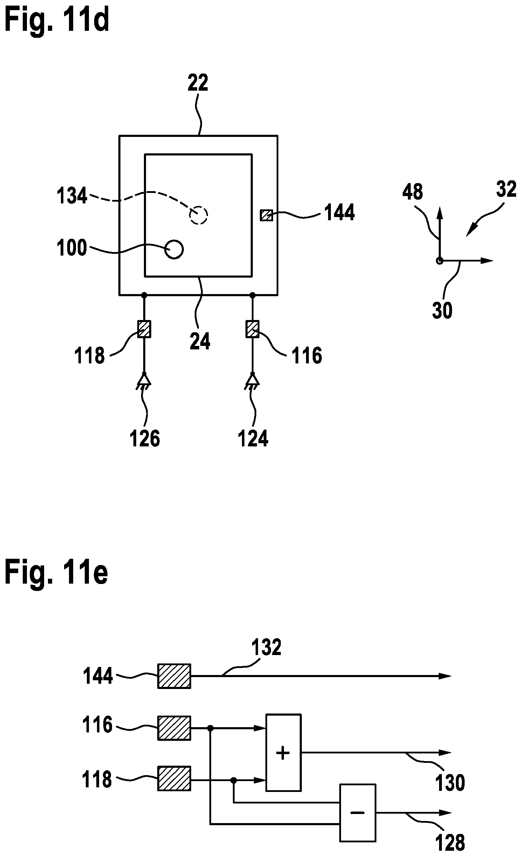

Fig. 11 zeigt eine vorteilhafte Eingabevorrichtung mit einem Bedienelement gemäß Fig. 9. Im Unterschied zur Fig. 9a wird in Fig. 11a anstelle der Lagerelemente 106, 108 ein Kugelgelenk 134 und/oder ein kardanisches Lager 134 verwendet. Das Kugellager 134 gewährleistet, dass sich die Halterung 22 der Eingabevorrichtung 20 um das Kugelgelenk 134 herum bewegen kann. Das Kugelgelenk ist mittels eines Lagers 136 an einer weiteren Halterung angeordnet.

Ferner wird in Fig. 11a anstelle eines Kraftsensors 102 gemäß Fig. 9a in Richtung der X-Achse 30 ein neunter Kraftsensor 138 in Richtung der Z-Achse 28 an der Halterung 22 angeordnet. Der neunte Kraftsensor 138 ist vorzugsweise an der Halterung 22 sowie einem weiteren Lager 140, insbesondere an einem festen Lager, angeordnet. Wird die Halterung, beispielsweise durch einen Benutzer, rotatorisch um das Kugelgelenk 134, beispielsweise um die Y-Achse und/oder um die X-Achse und/oder um die Z-Achse, bewegt, so ist eine Kraft mittels des neunten Kraftsensors 138 messbar.

Der Blick von oben auf die Eingabevorrichtung 20 gemäß Fig. 11b entspricht der Darstellung der Eingabevorrichtung 20 in der Fig. 9b. Anstelle der Kraftsensoren 102, 114 gemäß Fig. 9a in Richtung der X-Achse 30 werden in Fig. 11b ein neunter Kraftsensor 138 in Richtung der Z-Achse 28 an der Halterung 22 sowie ein zehnter Kraftsensor 142 in Richtung der Z-Achse 28 an der Halterung 22 angeordnet. Die Kraftsensoren 138, 142 können eine Krafteinwirkung in Richtung der Z-Achse 28 messen. Hierfür sind der neunte Kraftsensor 138 sowie der zehnte Kraftsensor 142 in einer Linie an der Halterung 22 angeordnet, wobei die gedachte Linie parallel zur Y-Achse 48 am Rand der Halterung 22 verläuft. In dieser Ausführungsform sind die Kraftsensoren 138, 142 jeweils an den Ecken der rechteckig ausgeführten Halterung 22 angeordnet. Weiterhin ist in Fig. 11b das Kugelgelenk 134 eingezeichnet. Gemäß Fig. 9 sind ein siebter Kraftsensor 116 sowie ein achter Kraftsensor 118 in Richtung der Y-Achse 48 angeordnet.

Zusätzlich oder alternativ zu den messbaren Kräften mittels der Kraftsensoren innerhalb der Eingabevorrichtung 20 gemäß Fig. 4c und/oder Fig. 1c, werden in Fig. 11c die Kräfte dargestellt, die mittels der Kraftsensoren 116, 118, 138, 142 außerhalb der Eingabevorrichtung 20 gemäß Fig. 11b messbar sind.

Beispielsweise kann ein drittes Drehmoment 128 um die Z-Achse 28 ermittelt werden. Hierfür werden die gemessene Kraft des siebten Kraftsensors 116 in Richtung der Y-Achse 48 und die gemessene Kraft des achten Kraftsensors 118 in Richtung der Y-Achse 48 voneinander abgezogen und anschließend in ein drittes Drehmoment 128 um die Z-Achse 28 umgerechnet. Ferner ist eine zweite Druckkraft 130 in Y-Richtung 48 bzw. in Richtung der Y-Achse 48 messbar, indem die gemessenen Kräfte der zwei Kraftsensoren 116, 118, welche in Richtung der Y-Achse 48 angeordnet sind, folglich die gemessene Kraft des siebten Kraftsensors 116 und die gemessene Kraft des achten Kraftsensors 118, zusammen gezählt bzw. addiert werden. Eine dritte Druckkraft 132 in X-Richtung 30 bzw. in Richtung der X-Achse 30 messbar, indem die gemessenen Kräfte der zwei Kraftsensoren 102, 114, welche in Richtung der X-Achse 30 angeordnet sind, folglich die gemessene Kraft des neunten Kraftsensors 138 und die gemessene Kraft des zehnten Kraftsensors 142, zusammen gezählt bzw. addiert werden und anschließend in eine dritte Druckkraft 132 in Richtung der X-Achse 30 umgerechnet werden, da die Halterung 22 rotatorisch um das Kugelgelenk 134 bewegbar ist. Bei einer Krafteinwirkung bzw. Verschiebung des Bedienelements 100 in Richtung der X-Achse 30, wird die Halterung 22 rotatorisch um das Kugelgelenk 134 um die Y-Achse 48 bewegt bzw. gedreht. Folglich können die Kraftsensoren in Richtung der Z-Achse 28 zur Berechnung bzw. Ermittlung der dritten Druckkraft 132 in Richtung der X-Achse verwendet werden.

In Fig. 11d wird eine weitere Ausgestaltung der Eingabevorrichtung 20 gezeigt, wobei der Blick von oben auf die Eingabevorrichtung 20 gemäß Fig. 11d der Darstellung der Eingabevorrichtung 20 in der Fig. 11b entspricht. In Fig. 11d wird lediglich ein elfter Kraftsensor 144 in Richtung der Z-Achse 28 an der Halterung 22 angeordnet. In dieser Ausführungsform ist der elfte Kraftsensor 144 in Richtung der Z-Achse nahe an einem Rand der Halterung 22 angeordnet, vorzugsweise am rechten oder linken Rand der Halterung 22.

Zusätzlich oder alternativ zu den messbaren Kräften mittels der Kraftsensoren innerhalb der Eingabevorrichtung 20 gemäß Fig. 4c und/oder Fig. 1c, werden in Fig. 11e die Kräfte dargestellt, die mittels der Kraftsensoren 116, 118, 144 außerhalb der Eingabevorrichtung 20 gemäß Fig. 11d messbar sind.

Beispielsweise kann ein drittes Drehmoment 128 um die Z-Achse 28 ermittelt werden. Hierfür werden die gemessene Kraft des siebten Kraftsensors 116 in Richtung der Y-Achse 48 und die gemessene Kraft des achten Kraftsensors 118 in Richtung der Y-Achse 48 voneinander abgezogen und anschließend in ein drittes Drehmoment 128 um die Z-Achse 28 umgerechnet. Ferner ist eine zweite Druckkraft 130 in Y-Richtung 48 bzw. in Richtung der Y-Achse 48 messbar, indem die gemessenen Kräfte der zwei Kraftsensoren 116, 118, welche in Richtung der Y-Achse 48 angeordnet sind, folglich die gemessene Kraft des siebten Kraftsensors 116 und die gemessene Kraft des achten Kraftsensors 118, zusammen gezählt bzw. addiert werden. Eine dritte Druckkraft 132 in X-Richtung 30 bzw. in Richtung der X-Achse 30 messbar, indem die gemessenen Kräfte des Kraftsensors in Richtung der Z-Achse 28 in eine dritte Druckkraft 132 in Richtung der X-Achse 30 umgerechnet wird.

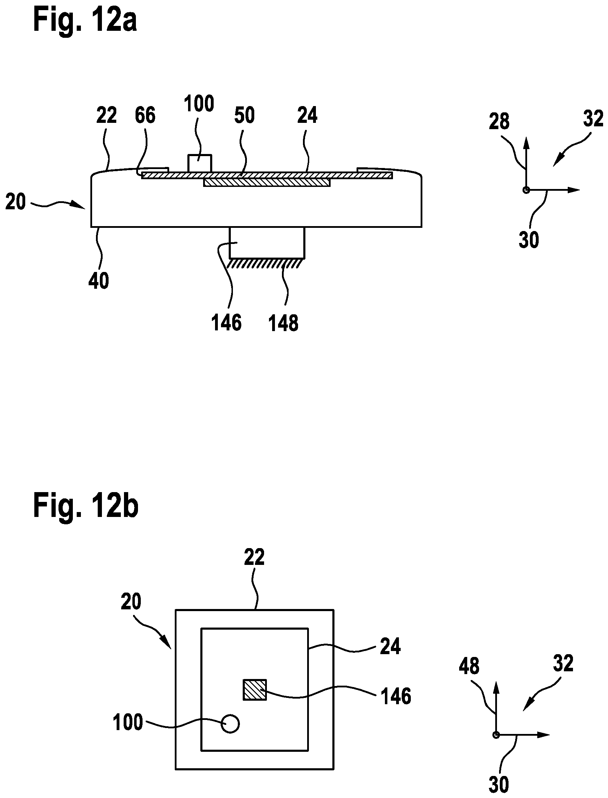

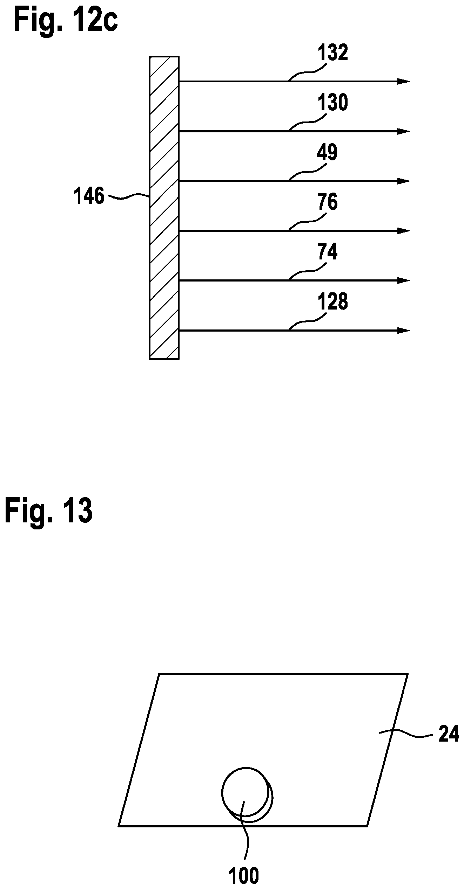

Fig. 12 zeigt eine vorteilhafte Eingabevorrichtung mit einem Bedienelement gemäß Fig. 9. Im Unterschied zur Fig. 9a wird in Fig. 11a anstelle der einzelnen Kraftsensoren eine mehrachsig wirkende Kraftmesszelle 146 an der Halterung 22 angeordnet. Diese wird vorzugsweise an der Halterung 22, auf der der Scheibe 24 und dem Bedienelement 100 gegenüberliegenden Seite der Halterung 22 so angeordnet, dass diese von der Halterung 22 weg zeigt. Vorzugsweise wird die Kraftmesszelle 146 auf der unteren Seite der Halterung 22 mittig angeordnet und an einem weiteren Element 148 bzw. mittels eines weiteren Elements 148 an einer weiteren Halterung angeordnet. Die Kraftmesszelle 146 kann eine erste Druckkraft 49 in Richtung der Z-Achse 28, eine zweite Druckkraft 130 in Richtung der Y-Achse 48 sowie eine dritte Druckkraft 132 in Richtung der X-Achse 30 messen.

In Fig. 12b wird die Kraftmesszelle 146 gezeigt, welche mittig an der rechteckig ausgeführten Halterung 22 angeordnet ist. Ebenfalls werden in Fig. 12b die Scheibe 24 sowie das Bedienelement 100 eingezeichnet.

In Fig. 12c werden die gemessenen Kräfte bzw. die ermittelten Drehmomente, welche mittels der Kraftmesszelle 146 gemessen bzw. ermittelt werden können, dargestellt. Die Kraftmesszelle 146 kann eine erste Druckkraft 49 in Richtung der Z-Achse 28, eine zweite Druckkraft 130 in Richtung der Y-Achse 48 sowie eine dritte Druckkraft 132 in Richtung der X-Achse 30 messen. Ferner kann die Kraftmesszelle 146 mittels der gemessenen Druckkräfte ein erstes Drehmoment 74 um die Y-Achse 48, ein zweites Drehmoment 76 um die X-Achse 30 sowie ein drittes Drehmoment 128 um die Z-Achse 28 ermitteln.

Fig. 13 zeigt eine schematische Darstellung einer Scheibe 24 mit einem Bedienelement 100. In dieser Ausführungsform ist die Scheibe 24 rechteckig ausgeführt. Das Bedienelement 100 ist auf der Scheibe 24 angeordnet, sodass das Bedienelement 100 kraftschlüssig mit der Scheibe 24 verbunden ist. Das Bedienelement 100 ist in dieser vorteilhaften Ausgestaltung am Rand einer, von vier Seiten der rechteckigen Scheibe 24 mittig angeordnet. In dieser Ausführungsform ist das Bedienelement 100 kreisförmig ausgeführt, wobei die Oberfläche des Bedienelements 100, welche zu einem Betrachter zeigt bzw. welche gegenüber der Scheibe 24 liegt, parallel zu der Oberfläche der Scheibe 24 ist. Mit anderen Worten ist das Bedienelement 100 als ein Zylinder ausgeführt.

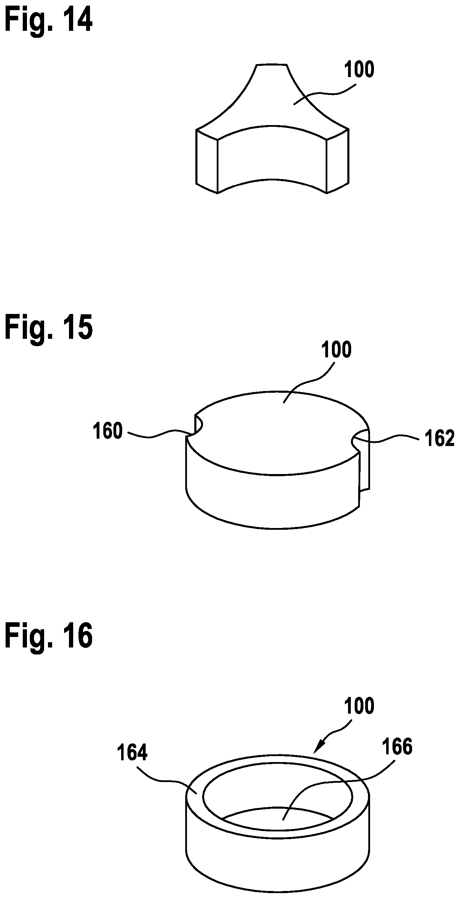

In Fig. 14 wird ein Bedienelement 100 gezeigt. In dieser Ausgestaltung ist das Bedienelement 100 als ein Zylinder ausgeführt, wobei drei halbkreisförmige Ausnehmungen am Rand des Zylinders eingebracht sind, sodass das Bedienelement 100 Vorsprünge aufweist. Vorzugsweise kann das Bedienelement 100 als ein Dreieck ausgeführt werden.

In Fig. 15 wird ein Bedienelement 100 gezeigt. In dieser Ausgestaltung ist das Bedienelement 100 als ein Zylinder ausgeführt, wobei zwei halbkreisförmige Ausnehmungen am Rand des Zylinders eingebracht sind. Die zwei halbkreisförmigen Ausnehmungen sind gegenüber am Rand des Zylinders eingebracht. Eine erste halbkreisförmige Aushebung 160 ist gegenüber einer zweiten halbkreisförmigen Aushebung 162 am Rand des Bedienelements 100 angebracht.

In Fig. 16 wird ein Bedienelement 100 gezeigt. In dieser Ausgestaltung ist das Bedienelement 100 als ein Zylinder ausgeführt, wobei in dieser Ausführungsform der Zylinder ein hohler Zylinder darstellt. Vorzugsweise wird eine zylinderförmige Ausnehmung 166 in den Zylinder eingebracht. Mit anderen Worten ist das Bedienelement 100 als ein Ring 164 ausgeführt.

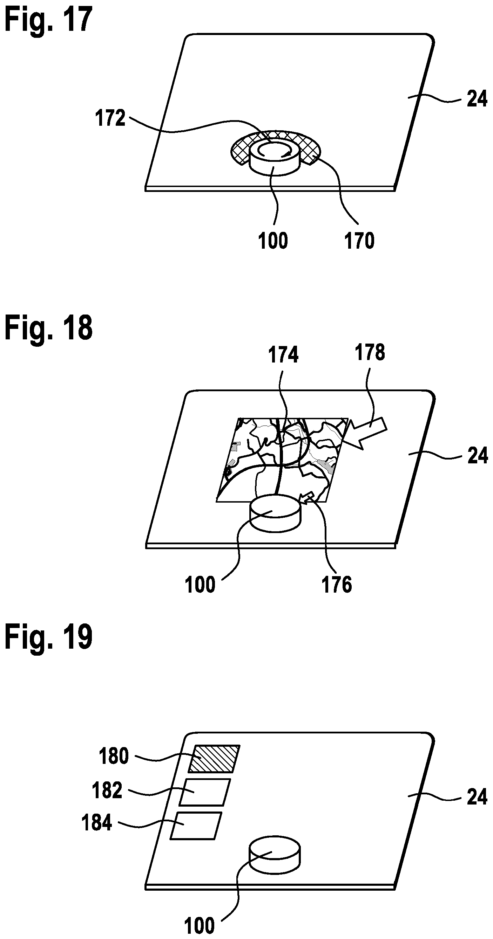

Fig. 17 zeigt eine schematische Darstellung einer Scheibe 24 mit einem Bedienelement 100 gemäß Fig. 13. Auf der Scheibe 24 bzw. auf einer Anzeigeeinheit, wobei die Anzeigeeinheit auf einer, dem Bedienelement abgewandten Seite der Scheibe 24 angeordnet ist, wird beispielsweise um das Bedienelement herum eine Markierung 170 dargestellt. Die Markierung 170 ist kreisförmig um das Bedienelement 100 herum angeordnet bzw. dargestellt. Diese Markierung kann beispielsweise eine Lautstärkenregelung, beispielsweise eines Radios, darstellen. Dreht ein Betrachter bzw. Nutzer am Bedienelement vorzugsweise in Richtung des Pfeils 172 das Bedienelement, so kann zum einen die Lautstärke beispielsweise eines Radios angepasst werden, und zum anderen die Markierung auf der Scheibe 24 um das Bedienelement 100 herum angepasst bzw. entsprechend verändert werden. Mit anderen Worten wird mittels der Markierung 170 um das Bedienelement 100 herum eine Regelung für eine Lautstärke beispielsweise eines Radios dargestellt.

Eine rotatorische Eingabe ist möglich, wenn die gemessene Kraft der Kraftsensoren differenziell ausgewertet werden kann. Folglich kann ein an dem Bedienelement 100 angreifendes Drehmoment ermittelt werden. Über die Stärke des Drehmoments kann beispielsweise die Geschwindigkeit einer Aktion, beispielsweise einer Lautstärkeänderung, gesteuert werden. Mittels der Wirkrichtung des Drehmoments wird ermittelt, ob die Lautstärke erhöht oder vermindert werden soll.

Bei einer rotatorische Bewegung des Bedienelements 100 wird eine Drehung um eine Achse des Bedienelements 100 durchgeführt, wobei die Achse durch den Mittelpunkt des Bedienelements 100 sowie senkrecht zu der Scheibe 24 verläuft.

Die mittels der Kraftsensoren gemessenen Kräfte werden zur Ansteuerung einer externen Einheit, beispielsweise eines Steuergeräts und/oder einer Anzeigeeinheit bezüglich ihrer Richtung, ihres Betrages sowie ihrer Achse verarbeitet.

Fig. 18 zeigt eine schematische Darstellung einer Scheibe 24 mit einem Bedienelement 100 gemäß Fig. 13. Auf der Scheibe 24 bzw. auf der darunterliegenden Anzeigeeinheit wird in dieser Ausführungsform eine Karte 174 bzw. eine Landkarte dargestellt. Wird das Bedienelement 100 beispielsweise durch einen Benutzer in Richtung eines ersten Pfeils 176 gedrückt, so wird die Karte 174 auf der Anzeigeeinheit entsprechend eines zweiten Pfeils 178 verschoben. Der erste Pfeil 176 und der zweite Pfeil 178 weißen in dieselbe Richtung und sind vorzugsweise parallel zueinander.

Dreht ein Nutzer an dem Bedienelement und wird folglich eine rotatorische Bewegung bzw. ein Drehmoment ermittelt, so kann die Karte bzw. die Navigationskarte vorteilhafterweise gedreht werden.

Die mittels der Kraftsensoren gemessenen Kräfte werden zur Ansteuerung einer externen Einheit, beispielsweise eines Steuergeräts und/oder einer Anzeigeeinheit bezüglich ihrer Richtung, ihres Betrages sowie ihrer Achse verarbeitet.

Fig. 19 zeigt eine schematische Darstellung einer Scheibe 24 mit einem Bedienelement 100 gemäß Fig. 13. Auf der Scheibe 24 bzw. auf der darunterliegenden Anzeigeeinheit wird in dieser Ausführungsform ein Menü bzw. eine Liste mit unterschiedlichen Unterpunkten bzw. Auswahlmöglichkeit dargestellt. In dieser Ausführungsform sind ein erster Unterpunkt 180, ein zweiter Unterpunkt 182 sowie ein dritter Unterpunkt 184, in dieser Ausführungsform, jeweils als Rechtecke dargestellt. Mittels des Bedienelements 100 kann ein Benutzer zwischen den Unterpunkten bzw. Auswahlmöglichkeiten hin und her wechseln bzw. hin und her scrollen, beispielsweise durch eine rotatorische Bewegung des Bedienelements 100 oder durch Drücken des Bedienelements 100 in die entsprechende Richtung der dargestellten Auswahlmöglichkeiten bzw. Unterpunkte. Der ausgewählte Unterpunkt kann insbesondere mittels einer Markierung hervorgehoben werden. In dieser Ausführungsform ist der erste Unterpunkt 180 des Menüs bzw. der Liste markiert. Soll der markierte Unterpunkt nun ausgewählt werden, kann diese Auswahl beispielsweise mittels eines Klicks bzw. mittels eines Drückens auf das Bedienelement 100 in Richtung einer Z-Achse getätigt werden. Mit anderen Worten klickt ein Nutzer auf das Bedienelement 100, wird der markierte Unterpunkt ausgewählt. Anschließend kann beispielsweise eine entsprechende Aktion ausgeführt werden.

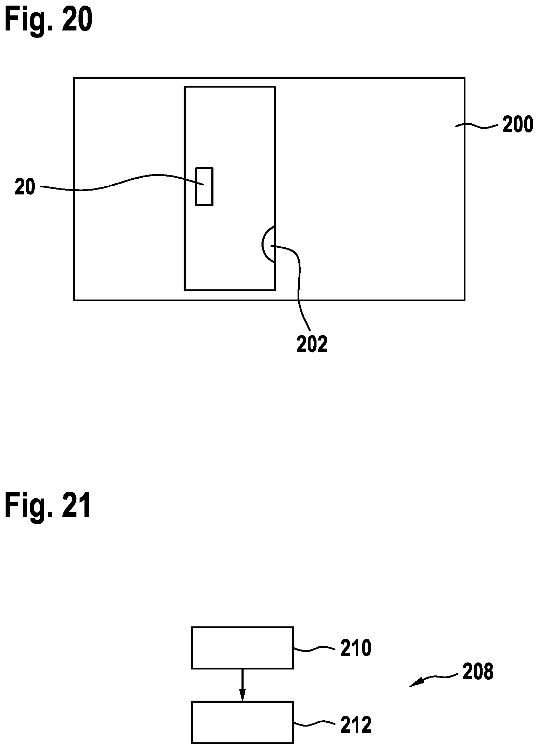

Fig. 20 zeigt eine Ausgestaltungsform einer schematischen Darstellung einer Draufsicht eines Fahrzeugs 200, beispielsweise eines Autos, mit einer Eingabevorrichtung 20. Die Eingabevorrichtung 20 ist derart in dem Fahrzeug 200 angeordnet, dass ein Betrachter 202, beispielsweise der Fahrer 202 und/oder ein Beifahrer, die Eingabevorrichtung 20 betrachten und/oder betätigen kann. Die Eingabevorrichtung 20 kann insbesondere in einer Mittelkonsole des Fahrzeugs 200 angebracht werden. Mittels der Eingabevorrichtung kann ein Nutzer beispielsweise unterschiedliche Punkte in einem Menü auswählen, beispielsweise in einem Navigationsmenü, eine Navigationskarte steuern, ein Infotainmentsystem steuern, beispielsweise eine Lautstärke regeln, eine Klimasystem bzw. in die Klimaanlage regeln bzw. steuern und weitere an steuerbare Funktionen in einem Fahrzeug.

Fig. 21 zeigt ein Verfahren 208 zum Betreiben einer Eingabevorrichtung. Das Verfahren 208 weist die folgenden Schritte auf.

In einem ersten Schritt 210 wird eine Krafteinwirkung auf die Scheibe und/oder eine Verschiebung der Scheibe in wenigstens eine vorgegebene Richtung mittels des einen oder der mehreren Sensoren an der Scheibe ermittelt, wobei die Krafteinwirkung auf die Scheibe und/oder die Richtung der Verschiebung der Scheibe und/oder der zurückgelegte Weg bei einer Verschiebung der Scheibe mittels des einen oder der mehreren Sensoren an der Scheibe gemessen wird.

Alternativ oder zusätzlich wird im ersten Schritt 210 eine Krafteinwirkung zugleich auf die Scheibe und auf die Halterung und/oder eine Verschiebung zugleich der Scheibe und der Halterung in wenigstens eine vorgegebene Richtung mittels des einen oder der mehreren Sensoren an der Scheibe und/oder an der Halterung ermittelt, wobei die Krafteinwirkung zugleich auf die Scheibe und auf die Halterung und/oder die Richtung der Verschiebung zugleich der Scheibe und der Halterung und/oder der zurückgelegte Weg bei einer Verschiebung zugleich der Scheibe und der Halterung mittels des einen oder der mehreren Sensoren an der Scheibe und/oder an der Halterung gemessen wird.

In einem zweiten Schritt 212 wird eine Aktion entsprechend der ermittelten Krafteinwirkung auf die Scheibe und/oder der ermittelten Verschiebung der Scheibe in wenigstens eine vorgegebene Richtung und/oder der ermittelten Krafteinwirkung zugleich auf die Scheibe und auf die Halterung und/oder der ermittelten Verschiebung zugleich der Scheibe und der Halterung in wenigstens eine vorgegebene Richtung ausgeführt.

## Patentansprüche

**1.** Eingabevorrichtung (20), umfassend ein Scheibe (24) und eine Halterung (22),

wobei auf der Scheibe (24) ein Bedienelement (100) derart angeordnet ist, dass das Bedienelement (100) kraftschlüssig mit der Scheibe (24) verbunden ist,
wobei die Halterung an einer ersten Seite eine Öffnung aufweist, an der die Scheibe angeordnet ist, und alle anderen Seiten der Halterung zumindest teilweise geschlossen sind, sodass eine erste Oberfläche der Scheibe von der Halterung weg zeigt und die erste Oberfläche von einem Nutzer lediglich durch die Öffnung der ersten Seite sichtbar ist,
wobei die erste Oberfläche der Scheibe entlang einer X-Achse und einer Y-Achse verläuft und eine Z-Achse senkrecht zu der ersten Oberfläche der Scheibe steht,
wobei die Scheibe in der Halterung (22) gelagert ist,
dass eine Krafteinwirkung auf das Bedienelement in Richtung der Z-Achse eine Krafteinwirkung auf die Scheibe in Richtung der Z-Achse bewirkt, eine Krafteinwirkung auf das Bedienelement in Richtung der Y-Achse eine Krafteinwirkung zugleich auf die Scheibe und die Halterung in Richtung der Y-Achse bewirkt, und eine Krafteinwirkung auf das Bedienelement in Richtung der X-Achse eine Krafteinwirkung zugleich auf die Scheibe und die Halterung in Richtung der X-Achse bewirkt,
wobei die Eingabevorrichtung weiterhin ein oder mehrere Sensoren innerhalb der Halterung umfasst zur Messung der Krafteinwirkung auf die Scheibe in Richtung der Z-Achse, wobei die ein oder mehreren Sensoren innerhalb der Halterung zum einen an einer zweiten, der ersten Oberfläche gegenüberliegenden Oberfläche der Scheibe befestigt und zum anderen an einer der ersten Seite der Halterung gegenüberliegenden, zweiten Seite der Halterung befestigt sind, und
die Eingabevorrichtung weitere Sensoren außerhalb der Halterung umfasst zur Messung der Krafteinwirkung in Richtung der X-Achse und der Krafteinwirkung in Richtung der Y-Achse, wobei die weiteren Sensoren zwischen der Halterung und einer weiteren Halterung fixiert sind.

**2.** Eingabevorrichtung (20) nach dem vorherigen Anspruch, **dadurch gekennzeichnet, dass** die Scheibe (24) und/oder das Bedienelement (100) transparent sind.

**3.** Eingabevorrichtung (20) nach einem der vorherigen Ansprüche, **dadurch gekennzeichnet, dass** in der Eingabevorrichtung (20) eine Anzeigeeinheit (50) angeordnet ist.

**4.** Eingabevorrichtung (20) nach Anspruch 3, **dadurch gekennzeichnet, dass** die Anzeigeeinheit (50) an der Scheibe (24) auf einer, dem Bedienelement (100) abgewandten Seite der Scheibe (24) und/oder an der Halterung (22) angeordnet ist.

**5.** Eingabevorrichtung (20) nach einem der vorherigen Ansprüche, **dadurch gekennzeichnet, dass** an der Scheibe (24) ein Touchpad angeordnet ist und/oder dass die Scheibe (24) als ein Touchpad ausgebildet ist.

**6.** Eingabevorrichtung (20) nach einem der vorherigen Ansprüche, **dadurch gekennzeichnet, dass** die kraftschlüssige Verbindung des Bedienelements (100) mit der Scheibe (24) eine Klebeverbindung ist.

**7.** Eingabevorrichtung (20) nach einem der vorherigen Ansprüche, **dadurch gekennzeichnet, dass** die Eingabevorrichtung (20) einen Aktuator (42) für eine haptische Rückmeldung umfasst.

**8.** Eingabevorrichtung (20) nach einem der vorherigen Ansprüche, **dadurch gekennzeichnet, dass** der eine oder die mehreren Sensoren an der Scheibe (24) und/oder an der Halterung (22) Kraftsensoren und/oder Wegsensoren sind.

**9.** Verfahren zum Betreiben einer Eingabevorrichtung (20) nach einem der vorherigen Ansprüche, mit den folgenden Schritten:

Ermitteln einer Krafteinwirkung auf die Scheibe und die Halterung in Richtung der X-Achse und/oder einer Krafteinwirkung auf die Scheibe und die Halterung in Richtung der Y-Achse und/oder einer Krafteinwirkung auf die Scheibe in Richtung der Z-Achse,
wobei eine Krafteinwirkung auf das Bedienelement in Richtung der Z-Achse eine Krafteinwirkung auf die Scheibe in Richtung der Z-Achse bewirkt, eine Krafteinwirkung auf das Bedienelement in Richtung der Y-Achse eine Krafteinwirkung zugleich auf die Scheibe und die Halterung in Richtung der Y-Achse bewirkt, und eine Krafteinwirkung auf das Bedienelement in Richtung der X-Achse eine Krafteinwirkung zugleich auf die Scheibe und die Halterung in Richtung der X-Achse bewirkt,
Ausführen einer Aktion entsprechend der ermittelten Krafteinwirkung.

**10.** Verfahren zum Betreiben einer Eingabevorrichtung (20) nach Anspruch 9, **dadurch gekennzeichnet, dass** eine Krafteinwirkung auf die Scheibe (24) und/oder zugleich auf die Scheibe (24) und auf die Halterung (22) und/oder eine Verschiebung der Scheibe (24) und/oder zugleich der Scheibe (24) und der Halterung (22) in wenigstens drei Richtungen linear messbar sind und dass die Richtung der Verschiebung der Scheibe (24) und/oder zugleich der Scheibe (24) und der Halterung (22) und/oder die Krafteinwirkung auf die Scheibe (24) und/oder zugleich auf die Scheibe (24) und auf die Halterung (22) und/oder der zurückgelegte Weg bei einer Verschiebung der Scheibe (24) und/oder zugleich der Scheibe (24) und der Halterung (22) mittels des einen oder der mehreren Sensoren an der Scheibe (24) und/oder an der Halterung (22) in wenigstens drei Richtungen linear messbar sind.

**11.** Verfahren zum Betreiben einer Eingabevorrichtung (20) nach einem der Ansprüche 9 - 10, **dadurch gekennzeichnet, dass** eine Krafteinwirkung auf die Scheibe (24) und/oder zugleich auf die Scheibe (24) und auf die Halterung (22) und/oder eine Verschiebung der Scheibe (24) und/oder zugleich der Scheibe (24) und der Halterung (22) in wenigstens eine Richtung rotatorisch messbar sind und dass die Richtung der Verschiebung der Scheibe (24) und/oder zugleich der Scheibe (24) und der Halterung (22) und/oder die Krafteinwirkung auf die Scheibe (24) und/oder zugleich auf die Scheibe (24) und auf die Halterung (22) und/oder der zurückgelegte Weg bei einer Verschiebung der Scheibe (24) und/oder zugleich der Scheibe (24) und der Halterung (22) mittels des einen oder der mehreren Sensoren an der Scheibe (24) und/oder an der Halterung (22) in wenigstens eine Richtung rotatorisch messbar sind.

**Claims**

**1.** Input apparatus (20), comprising a plate (24) and a holder (22),

wherein an operator control element (100) is arranged on the plate (24) in such a way that the operator control element (100) is non-positively connected to the plate (24),

wherein the holder has an opening on a first side, the plate being arranged at this opening, and all other sides of the holder are at least partially closed, so that a first surface of the plate faces away from the holder and the first surface is visible to a user only through the opening of the first side,

wherein the first surface of the plate runs along an X-axis and a Y-axis, and a Z-axis is perpendicular to the first surface of the plate,

wherein the plate is mounted in the holder (22), wherein an action of force on the operator control element in the direction of the Z-axis causes an action of force on the plate in the direction of the Z-axis, an action of force on the operator control element in the direction of the Y-axis causes an action of force simultaneously on the plate and the holder in the direction of the Y-axis, and an action of force on the operator control element in the direction of the X-axis causes an action of force simultaneously on the plate and the holder in the direction of the X-axis,

wherein the input apparatus further comprises one or more sensors inside the holder for measuring the action of force on the plate in the direction of the Z-axis, wherein the one or more sensors inside the holder are fastened firstly to a second surface of the plate, said second surface being situated opposite the first surface, and secondly to a second side of the holder, said second side being situated opposite the first side of the holder, and the input apparatus comprises further sensors outside the holder for measuring the action of force in the direction of the X-axis and the action of force in the direction of the Y-axis, wherein the further sensors are fixed between the holder and a further holder.

2. Input apparatus (20) according to the preceding claim, **characterized in that** the plate (24) and/or the operator control element (100) are/is transparent.

3. Input apparatus (20) according to either of the preceding claims, **characterized in that** a display unit (50) is arranged in the input apparatus (20).

4. Input apparatus (20) according to Claim 3, **characterized in that** the display unit (50) is arranged on the plate (24) on a side of the plate (24) that is averted from the operator control element (100) and/or on the holder (22).

5. Input apparatus (20) according to one of the preceding claims, **characterized in that** a touchpad is arranged on the plate (24) and/or **in that** the plate (24) is in the form of a touchpad.

6. Input apparatus (20) according to one of the preceding claims, **characterized in that** the non-positive connection between the operator control element (100) and the plate (24) is an adhesive connection.

7. Input apparatus (20) according to one of the preceding claims, **characterized in that** the input apparatus (20) comprises an actuator (42) for haptic feedback.

8. Input apparatus (20) according to one of the preceding claims, **characterized in that** the one or more sensors on the plate (24) and/or on the holder (22) are force sensors and/or travel sensors.

9. Method for operating an input apparatus (20) according to one of the preceding claims, comprising the following steps:

determining an action of force on the plate and the holder in the direction of the X-axis and/or an action of force on the plate and the holder in the direction of the Y-axis and/or an action of force on the plate in the direction of the Z-axis,

wherein an action of force on the operator control element in the direction of the Z-axis causes an action of force on the plate in the direction of the Z-axis, an action of force on the operator control element in the direction of the Y-axis causes an action of force simultaneously on the plate and the holder in the direction of the Y-axis, and an action of force on the operator control element in the direction of the X-axis causes an action of force simultaneously on the plate and the holder in the direction of the X-axis,

executing an action in accordance with the determined action of force.

10. Method for operating an input apparatus (20) according to Claim 9, **characterized in that** an action of force on the plate (24) and/or simultaneously on the plate (24) and on the holder (22) and/or a displacement of the plate (24) and/or simultaneously the plate (24) and the holder (22) can be linearly measured in at least three directions, and **in that** the direction of the displacement of the plate (24) and/or simultaneously the plate (24) and the holder (22) and/or the action of force on the plate (24) and/or simultaneously on the plate (24) and on the holder (22) and/or the distance covered during a displacement of the plate (24) and/or simultaneously the plate (24) and the holder (22) can be linearly measured in at least three directions by means of the one or more sensors on the plate (24) and/or on the holder (22) .

**11.** Method for operating an input apparatus (20) according to either of Claims 9 and 10, **characterized in that** an action of force on the plate (24) and/or simultaneously on the plate (24) and on the holder (22) and/or a displacement of the plate (24) and/or simultaneously the plate (24) and the holder (22) can be rotationally measured in at least one direction, and **in that** the direction of the displacement of the plate (24) and/or simultaneously the plate (24) and the holder (22) and/or the action of force on the plate (24) and/or simultaneously on the plate (24) and on the holder (22) and/or the distance covered during a displacement of the plate (24) and/or simultaneously the plate (24) and the holder (22) can be rotationally measured in at least one direction by means of the one or more sensors on the plate (24) and/or on the holder (22).

**Revendications**

**1.** Dispositif d'entrée (20), comprenant une vitre (24) et un support (22),

un élément de commande (100) étant disposé sur la vitre (24) de manière à relier l'élément de commande (100) à la vitre (24) par une liaison en force,
le support comportant sur un premier côté une ouverture au niveau de laquelle la vitre est disposée, et tous les autres côtés du support étant au moins partiellement fermés de sorte qu'une première surface de la vitre est dirigée à l'opposé du support et la première surface est visible par un utilisateur uniquement par l'ouverture du premier côté,
la première surface de la vitre s'étendant suivant un axe X et un axe Y et un axe Z étant perpendiculaire à la première surface de la vitre,
la vitre étant montée dans le support (22),
une force agissant sur l'élément de commande dans la direction de l'axe Z ayant pour effet qu'une force agit sur la vitre en direction de l'axe Z, une force agissant sur l'élément de commande dans la direction de l'axe Y ayant pour effet qu'une force agit à la fois sur la vitre et le support dans la direction de l'axe Y, et une force agissant sur l'élément de commande dans la direction de l'axe X ayant pour effet qu'une force agit à la fois sur la vitre et le support dans la direction de l'axe X,
le dispositif d'entrée comprenant en outre un ou plusieurs capteurs placés à l'intérieur du support et destinés à mesurer la force agissant sur la vitre dans la direction de l'axe Z, le ou les capteurs étant fixés à l'intérieur du support d'une part à une deuxième surface de la vitre opposée à la première surface et d'autre part à un deuxième côté du support opposé au premier côté du support, et le dispositif d'entrée comprenant d'autres capteurs placés à l'extérieur du support et destinés à mesurer la force agissant dans la direction de l'axe X et la force agissant dans la direction de l'axe Y, les autres capteurs étant fixés entre le support et un autre support.

**2.** Dispositif d'entrée (20) selon la revendication précédente, **caractérisé en ce que** la vitre (24) et/ou l'élément de commande (100) sont transparents.

**3.** Dispositif d'entrée (20) selon l'une des revendications précédentes, **caractérisé en ce qu'**une unité d'affichage (50) est disposée dans le dispositif d'entrée (20).

**4.** Dispositif d'entrée (20) selon la revendication 3, **caractérisé en ce que** l'unité d'affichage (50) est disposée sur la vitre (24) sur un côté de la vitre (24) qui est opposé à l'élément de commande (100) et/ou sur le support (22).

**5.** Dispositif d'entrée (20) selon l'une des revendications précédentes, **caractérisé en ce qu'**un pavé tactile est disposé sur la vitre (24) et/ou **en ce que** la vitre (24) est conçue comme un pavé tactile.

**6.** Dispositif d'entrée (20) selon l'une des revendications précédentes, **caractérisé en ce que** la liaison en force de l'élément de commande (100) à la vitre (24) est une liaison adhésive.

**7.** Dispositif d'entrée (20) selon l'une des revendications précédentes, **caractérisé en ce que** le dispositif d'entrée (20) comprend un actionneur (42) destiné à effectuer un retour haptique.

8. Dispositif d'entrée (20) selon l'une des revendications précédentes, **caractérisé en ce que** le ou les capteurs sur la vitre (24) et/ou sur le support (22) sont des capteurs de force et/ou des capteurs de déplacement.

9. Procédé de fonctionnement d'un dispositif d'entrée (20) selon l'une des revendications précédentes, ledit dispositif comprenant les étapes suivantes :

déterminer une force agissant sur la vitre et le support dans la direction de l'axe X et/ou une force agissant sur la vitre et le support dans la direction de l'axe Y et/ou une force agissant sur la vitre dans la direction de l'axe z, une force agissant sur l'élément de commande dans la direction de l'axe Z ayant pour effet qu'une force agit sur la vitre dans la direction de l'axe Z, une force agissant sur l'élément de commande dans la direction de l'axe Y ayant pour effet qu'une force agit à la fois sur la vitre et le support dans la direction de l'axe Y, et une force agissant sur l'élément de commande dans la direction de l'axe X ayant pour effet qu'une force agit à la fois sur la vitre et le support dans la direction de l'axe X, exécuter une action en fonction de la force déterminée.

10. Procédé de fonctionnement d'un dispositif d'entrée (20) selon la revendication 9, **caractérisé en ce qu'**une force agissant sur la vitre (24) et/ou à la fois sur la vitre (24) et le support (22) et/ou un déplacement de la vitre (24) et/ou à la fois de la vitre (24) et du support (22) peuvent être mesurés linéairement dans au moins trois directions et **en ce que** la direction de déplacement de la vitre (24) et/ou à la fois de la vitre (24) et du support (22) et/ou la force agissant sur la vitre (24) et/ou à la fois sur la vitre (24) et le support (22) et/ou la distance parcourue lors du déplacement de la vitre (24) et/ou à la fois de la vitre (24) et du support (22) peuvent être mesurés linéairement dans au moins trois directions au moyen du ou des capteurs sur la vitre (24) et/ou sur le support (22) .

11. Procédé de fonctionnement d'un dispositif d'entrée (20) selon l'une des revendications 9-10, **caractérisé en ce qu'**une force agissant sur la vitre (24) et/ou à la fois sur la vitre (24) et le support (22) et/ou un déplacement de la vitre (24) et/ou à la fois de la vitre (24) et du support (22) peuvent être mesurés en rotation dans au moins une direction et **en ce que** la direction du déplacement de la vitre (24) et/ou à la fois de la vitre (24) et du support (22) et/ou la force agissant sur la vitre (24) et/ou à la fois sur la vitre (24) et le support (22) et/ou la distance parcourue lors du déplacement de la vitre (24) et/ou à la fois de la vitre (24) et du support (22) peuvent être mesurés en rotation dans au moins une direction au moyen du ou des capteurs sur la vitre (24) et/ou sur le support (22) .

# Fig. 1a

**22**  **24**  **26**  **25**  **46**

**20**

**28**  **32**

**30**

**42**  **34**  **38**  **40**  **36**

**44**

# Fig. 1b

**20**  **24**  **22**

**48**  **32**

**30**

**44**

**26**

# Fig. 1c

**44**  **49**

## Fig. 2

**22**  **24**  **50**  **26**  **46**  **28**  **32**

**20**  **44**  **30**

**42**  **34**  **38**  **34**

## Fig. 3

**22**  **24**  **50**  **40**  **46**  **28**  **32**

**20**  **44**  **30**

**42**  **34**  **52**  **54**  **36**

# Fig. 4a

# Fig. 4b

**Fig. 4c**

**Fig. 5**

**Fig. 6a**

**Fig. 6b**

# Fig. 7

46

44

90

88

# Fig. 8

22  66  100  50  24  26  64  46  98 49 74  28  32

62

20

94  60  42  56  40  38  58  68  44 92  76 96

30

## Fig. 9a

## Fig. 9b

# Fig. 9c

# Fig. 10a

EP 3 583 493 B1

## Fig. 10b

70 22 72  135 114

50

60

133 102

48  32

30

139

118 24 44 116 137

## Fig. 11a

22 100 50 24 46

62

20 40 60 42 56 58 68 138 44

134 136

140

28 32

30

28

# Fig. 11b

# Fig. 11c

# Fig. 11d

# Fig. 11e

## Fig. 12a

## Fig. 12b

**Fig. 12c**

146 —

132

130

49

76

74

128

**Fig. 13**

24

100

**Fig. 14**

100

**Fig. 15**

100

160

162

**Fig. 16**

100

164

166

**Fig. 17**

172

24

100    170

**Fig. 18**

174    178

24

100    176

**Fig. 19**

180

182

184

24

100

**Fig. 20**

**Fig. 21**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20130002571 A1
- US 20100045624 A1
- US 20160004355 A1
- US 20120326981 A1